# EUROPEAN PATENT SPECIFICATION

(11) **EP 1 406 932 B1**
(45) Date of publication and mention of the grant of the patent: **12.12.2007**
(21) Application number: 02714561.4
(22) Date of filing: 09.04.2002
(51) Int. Cl.: C08F 8/42

(54) **QUICK CURING COMPOSITION**
SCHNELL HÄRTENDE ZUSAMMENSETZUNG
COMPOSITION A DURCISSEMENT RAPIDE

(30) Priority: 21.06.2001 JP 2001188550
(43) Date of publication of application: 14.04.2004
(73) Proprietor: KANEKA CORPORATION, Osaka-shi, Osaka 530-8288 (JP)
(72) Inventor: HASEGAWA, Nobuhiro, c/o KANEKA CORPORATION, Settsu-shi, Osaka 566-0072 (JP); NAKAGAWA, Yoshiki, c/o KANEKA CORPORATION, Settsu-shi, Osaka 566-0072 (JP)
(74) Representative: HOFFMANN EITLE
(86) International application number: PCT/JP2002/003539
(87) International publication number: WO 2003/000749

(56) References cited:
- EP-A- 0 050 248
- EP-A- 1 000 980
- EP-A2- 1 182 215
- FR-A- 2 401 176
- GB-A- 2 202 538
- JP-A- 11 116 617
- JP-A- 2000 086 998
- US-A- 4 334 036
- US-A- 4 618 650

## Description

### TECHNICAL FIELD

The present invention relates to a quick curing composition. More particularly, it relates to a quick curing composition comprising a vinyl polymer having a crosslinking silyl group-terminated main chain, in which the crosslinking silyl group is represented by the general formula (1) :

- SiYₐR₃₋ₐ (1)

in the formula, R represents an alkyl group containing 1 to 20 carbon atoms, an aryl group containing 6 to 20 carbon atoms, an aralkyl group containing 7 to 20 carbon atoms or a triorganosiloxy group represented by (R')₃SiO-, R' is a univalent hydrocarbon group containing 1 to 20 carbon atoms and the three R' groups may be the same or different, and, when there are two or more R groups, they may be the same or different; Y represents a hydroxyl group or a hydrolyzable group and, when there are two or more Y groups, they may be the same or different; and a represents 1, 2 or 3.

### BACKGROUND OF THE INVENTION

Unlike polymers obtained by ionic polymerization or polycondensation, vinyl polymers obtainable by radical polymerization and having a functional group, in particular a terminal functional group, have scarcely been put to practical use. Among vinyl polymers, (meth)acrylic polymers have characteristics, in particular high weathering resistance and transparency, which cannot be possessed by the above-mentioned polyether polymers or hydrocarbon polymers or polyester polymers. (Meth)acrylic polymers having an alkenyl group or a crosslinking silyl group on a side chain thereof have been used in highly weathering-resistant coatings, for instance. On the other hand, in producing acrylic polymers, it is not easy to control the polymerization due to side reactions thereof and it is very difficult to achieve terminal functional group introduction, for instance.

If a vinyl polymer having an alkenyl group-terminated molecular chain can be obtained in a simple and easy manner, it will become possible to obtain curing products superior in curing product physical properties as compared with one having a crosslinking group on a side chain(s). Therefore, a number of researchers have made investigations in search of a method of producing the same. However, it is still not easy to produce such on a commercial scale. In Japanese Kokai Publication Hei-01-247403 and Japanese Kokai Publication Hei-05-255415, for instance, there is disclosed a method of synthesizing alkenyl group-terminated (meth)acrylic polymers in which an alkenyl group-containing disulfide is used as a chain transfer agent.

In Japanese Kokai Publication Hei-05-262808, there is disclosed a method which comprises synthesizing a vinyl polymer having a hydroxyl group at each of both termini using a hydroxyl group-containing disulfide and further synthesizing an alkenyl group-terminated (meth)acrylic polymer utilizing the reactivity of the hydroxyl groups.

In Japanese Kokai Publication Hei-05-211922, there is disclosed a method which comprises synthesizing a vinyl polymer having a hydroxyl group at each of both termini using a hydroxyl group-containing polysulfide and further synthesizing a silyl group-terminated (meth)acrylic polymer utilizing the reactivity of the hydroxyl groups.

It is difficult, however, to introduce a functional group into each of both termini with certainty by these methods; curing products having satisfactory characteristics cannot be obtained. For introducing a functional group into each of both termini with certainty, it is necessary to use the chain transfer agent in large amounts; this poses a problem from the production process viewpoint. These methods use an ordinary radical polymerization technique and, therefore, the molecular weight and molecular weight distribution (ratio between number average molecular weight and weight average molecular weight) of the product polymer can hardly be controlled.

Contrary to such prior art, the present inventors have so far made a number of inventions concerning various crosslinking functional group-terminated vinyl polymers, methods of producing the same, curable compositions and uses thereof (see, for example, Japanese Kokai Publication Hei-11-080249, Japanese Kokai Publication Hei-11-080250, Japanese Kokai Publication Hei-11-005815, Japanese Kokai Publication Hei-11-116617, Japanese Kokai Publication Hei-11-116606, Japanese Kokai Publication Hei-11-080571, Japanese Kokai Publication Hei-11-080570, Japanese Kokai Publication Hei-11-130931, Japanese Kokai Publication Hei-11-100433, Japanese Kokai Publication Hei-11-116763, Japanese Kokai Publication Hei-09-272714 and Japanese Kokai Publication Hei-09-272715).

For example, curing products obtainable from vinyl polymers which has a silicon-containing group(s) having a hydroxyl group(s) or hydrolyzable group(s) bound to a silicon atom and capable of crosslinking under formation of a siloxane bond (hereinafter such silicon-containing group is referred to as "crosslinking silyl group") or from compositions comprising the same are excellent in heat resistance or weathering resistance and can be utilized in various fields including, but not limited to, sealants for elastic sealing materials for building use, sealing materials for double glazing, and like sealing materials, solar cell reverse side sealing materials and other electric and electronic part materials, insulating covering materials for electric wires or cables and other insulating materials, pressure sensitive adhesives, adhesives, elastic adhesives, coatings, powder coatings, coating materials, foamed bodies, potting materials for electric and electronic use, films, gaskets, casting materials, various molding materials, and rustproof/waterproof sealants for end faces (cut sections) of wire glass or double glazing, and seals in automotive parts, electric machinery parts, various machinery parts, etc.

### SUMMARY OF THE INVENTION

However, the vinyl polymers having such crosslinking silyl groups that have so far been used are mostly those having two silicon-hydrolyzable group bonds per crosslinking silyl group.

In particular when a very rapid curing rate is required, for example for use as adhesives or the like or for use at low temperatures, the polymers having two silicon-hydrolyzable group bonds are insufficient in curing rate in many instances. Further, for obtaining flexible curing products, it is necessary to reduce the crosslinking density in curing products. When the polymers having two silicon-hydrolyzable group bonds are used, however, the crosslink density is not enough, so that the problem of stickiness (surface tackiness) arises. Accordingly, it is an object of the present invention to provide a quick curing composition capable of providing curing products with good curability.

In view of the above-mentioned state of the art, the present inventors made intensive investigations and, as a result, found that the above problems can be alleviated when use is made of a quick curing composition comprising a vinyl polymer having a crosslinking silyl group-terminated main chain,
wherein the crosslinking silyl group is represented by the general formula (1) provided that a is 3:

-SiYₐR₃₋ₐ (1)

in the formula, R represents an alkyl group containing 1 to 20 carbon atoms, an aryl group containing 6 to 20 carbon atoms, an aralkyl group containing 7 to 20 carbon atoms or a triorganosiloxy group represented by (R')₃SiO-, R' is a univalent hydrocarbon group containing 1 to 20 carbon atoms and the three R' groups may be the same or different, and, when there are two or more R groups, they may be the same or different; Y represents a hydroxyl group or a hydrolyzable group and, when there are two or more Y groups, they may be the same or different; and a represents 1, 2 or 3.

In the practice of the present invention, the vinyl polymer preferably has a molecular weight distribution of less than 1.8.

In accordance with the present invention, the main chain of the vinyl polymer is not particularly restricted but preferably produced by polymerizing, as a main monomer, a monomer selected from the group comprising (meth)acrylic monomers, acrylonitrile monomers, aromatic vinyl monomers, fluorine-containing vinyl monomers and silicon-containing vinyl monomers, more preferably a (meth)acrylic monomer, still more preferably an acrylic monomer, further more preferably an acrylate ester monomer, most preferably monomeric butyl acrylate.

In the practice of the present invention, the vinyl polymer is preferably produced by living radical polymerization, and the living radical polymerization is preferably atom transfer radical polymerization. On such occasions, an atom transfer radical polymerization catalyst is preferably a metal complex, said metal being selected from the group consisting of elements of the groups 7, 8, 9, 10 and 11 of the periodic table, more preferably a metal complex, said metal being selected from the group consisting of copper, nickel, ruthenium and iron, and a copper complex is most preferred as the catalyst.

In the practice of the present invention, it is preferred that substantially all crosslinking silyl groups of the vinyl polymer are crosslinking silyl groups of the general formula (1) provided that a is 3.

In the practice of the present invention, the vinyl polymer preferably comprises both a crosslinking silyl group of the general formula (1) provided that a is 3 and a crosslinking silyl group of the general formula (1) provided that a is 1 or 2 in the molecular.

The composition of the present invention preferably comprises both a vinyl polymer having crosslinking silyl groups of the general formula (1) provided that a is 3 and
a vinyl polymer having crosslinking silyl groups of the general formula (1) provided that a is 1 or 2.

The composition of the present invention preferably comprises both a vinyl polymer having crosslinking silyl groups of the general formula (1) provided that a is 3 and
a vinyl polymer having crosslinking silyl groups of the general formula (1) provided that a is 1 or 2 in substantially all crosslinking silyl groups.

The composition of the present invention preferably comprises both a vinyl polymer having crosslinking silyl groups of the general formula (1) provided that a is 3 and
a vinyl polymer having crosslinking silyl groups of the general formula (1) provided that a is 2 in substantially all crosslinking silyl groups.

The composition of the present invention preferably comprises both a vinyl polymer having crosslinking silyl groups of the general formula (1) provided that a is 3 in substantially all crosslinking silyl groups and
a vinyl polymer having both a crosslinking silyl group of the general formula (1) provided that a is 3 and a crosslinking silyl group of the general formula (1) provided that a is 1 or 2 in the molecular.

The composition of the present invention preferably comprises both a vinyl polymer having crosslinking silyl groups of the general formula (1) provided that a is 3 in substantially all crosslinking silyl groups and
a vinyl polymer having crosslinking silyl groups of the general formula (1) provided that a is 1 or 2.

The composition of the present invention preferably comprises both a vinyl polymer having crosslinking silyl groups of the general formula (1) provided that a is 3 in substantially all crosslinking silyl groups and
a vinyl polymer having crosslinking silyl groups of the general formula (1) provided that a is 1 or 2 in substantially all crosslinking silyl groups.

The composition of the present invention preferably comprises a tin curing catalyst in an amount of 0.1 to 20 parts by weight relative to 100 parts by weight of the vinyl polymer. In the practice of the present invention, an air oxidation-curable substance and/or a photocurable substance is preferably used combinedly to suppress the surface tackiness. Further, a silanol-containing compound is preferably used combinedly to suppress the surface tackiness without remarkably increasing the modulus of curing products, although the use thereof is not particularly obligatory. By using a high molecular weight plasticizer, it is also possible to further suppress the staining of curing products for a long period of time.

In the practice of the present invention, the sites of crosslinking silyl groups in the vinyl polymer are located only at the termini of the main chain. The number of crosslinking silyl groups in the vinyl polymer is not less than 1.2, preferably not less than 1.5, on the average, so that curing products with higher crosslinkability may be obtained.

A vinyl polymer of the present invention preferably comprises a crosslinking silyl group-terminated main chain,
wherein the crosslinking silyl group is represented by the general formula (6) provided that m = 0 and a = 3, or m is an integer of not less than 1 and a + mb = 3:

-[Si(R⁹)_{2-b}(Y)_{b}O]ₘ-Si(R¹⁰)₃₋ₐ(Y)ₐ (6)

in the formula, R⁹ and R¹⁰ each represents an alkyl group containing 1 to 20 carbon atoms, an aryl group containing 6 to 20 carbon atoms, an aralkyl group containing 7 to 20 carbon atoms or a triorganosiloxy group represented by (R')₃SiO-, R' is a univalent hydrocarbon group containing 1 to 20 carbon atoms and the three R' groups may be the same or different, and, when there are two or more R⁹ or R¹⁰ groups, they may be the same or different; Y represents a hydroxyl group or a hydrolyzable group and, when there are two or more Y groups, they may be the same or different; a represents 0, 1, 2 or 3, b represents 0, 1 or 2, and m is an integer of 0 to 19, provided that the relation a + mb ≧ 1 is satisfied.

### DETAILED DESCRIPTION OF THE INVENTION

The present invention related to a curable composition. More particularly, it relates to a quick curing composition comprising a vinyl polymer having a crosslinking silyl group-terminated main chain, wherein the crosslinking silyl group is represented by the general formula (1) provided that a is 3:

-SiYₐR₃₋ₐ (1)

in the formula, R, Y and a are as defined above.

In the following, the curable composition of the present invention is described in detail.

### <<Vinyl polymer>>

### <Main chain>

The present inventors have so far made a number of inventions concerning various crosslinking functional group-terminated vinyl polymers, methods of producing the same, curable compositions and uses thereof (see, e.g. Japanese Kokai Publication Hei-11-080249, Japanese Kokai Publication Hei-11-080250, Japanese Kokai Publication Hei-11-005815, Japanese Kokai Publication Hei-11-116617, Japanese Kokai Publication Hei-11-116606, Japanese Kokai Publication Hei-11-080571, Japanese Kokai Publication Hei-11-080570, Japanese Kokai Publication Hei-11-130931, Japanese Kokai Publication Hei-11-100433, Japanese Kokai Publication Hei-11-116763, Japanese Kokai Publication Hei-09-272714 and Japanese Kokai Publication Hei-09-272715). The vinyl polymer (I) to be used in the practice of the present invention is not particularly restricted but all the polymers disclosed by the inventions cited above can suitably be used.

The vinyl monomer(s) to constitute the main chain of the vinyl polymer to be used according to the invention is not particularly restricted but includes various ones. Examples are (meth)acrylic monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, (meth)acrylic acid-ethylene oxide adducts, trifluoromethylmethyl (meth)acrylate, 2-trifluoromethylethyl (meth)acrylate, perfluoroethylmethyl (meth)acrylate, 2-perfluoroethylethyl (meth)acrylate, perfluoroethylperfluorobutylmethyl (meth)acrylate, 2-perfluoroethyl-2-perfluorobutylethyl (meth)acrylate, perfluoroethyl (meth)acrylate, perfluoromethyl (meth)acrylate, diperfluoromethylmethyl (meth)acrylate, 2,2-diperfluoromethylethyl (meth)acrylate, perfluoromethylperfluoroethylmethyl (meth)acrylate, 2-perfluoromethyl-2-perfluoroethylethyl (meth)acrylate, 2-perfluorohexylmethyl (meth)acrylate, 2-perfluorohexylethyl (meth)acrylate, 2-perfluorodecylmethyl (meth)acrylate, 2-perfluorodecylethyl (meth)acrylate, 2-perfluorohexadecylmethyl (meth)acrylate and 2-perfluorohexadecylethyl (meth)acrylate; aromatic vinyl monomers such as styrene, vinyltoluene, α-methylstyrene, chlorostyrene, styrenesulfonic acid and salts thereof; fluorine-containing vinyl monomers such as perfluoroethylene, perfluoropropylene and vinylidene fluoride; silicon-containing vinyl monomers such as vinyltrimethoxysilane and vinyltriethoxysilane; maleic anhydride, maleic acid, and maleic acid monoalkyl esters and dialkyl esters; fumaric acid and fumaric acid monoalkyl esters and dialkyl esters; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; acrylonitrile monomers such as acrylonitrile and methacrylonitrile; amide group-containing vinyl monomers such as acrylamide and methacrylamide; vinyl esters such as vinyl acetate, vinyl propionate, vinyl pivalate, vinyl benzoate and vinyl cinnamate; alkenes such as ethylene and propylene; conjugated dienes such as butadiene and isoprene; vinyl chloride, vinylidene chloride, allyl chloride and allyl alcohol. These may be used singly or a plurality of them may be used for copolymerization.

The main chain of the vinyl polymer is preferably produced by polymerizing, as a main monomer(s), at least one monomer selected from the group consisting of (meth)acrylic monomers, acrylonitrile monomers, aromatic vinyl monomers, fluorine-containing vinyl monomers and silicon-containing vinyl monomers. The phrase "as a main monomer" as used herein means that the above monomer accounts for at least 50 mole percent, preferably at least 70 mole percent, of the monomer units constituting the vinyl polymer.

From the viewpoint of product physical properties, among others, styrenic monomers and (meth)acrylic monomers are preferred. More preferred are acrylate ester monomers and methacrylate ester monomers. Acrylate ester monomers are still more preferred, and butyl acrylate is particularly preferred. In the practice of the present invention, these preferred monomers may be copolymerized or block-copolymerized with another monomer or other monomers. On such occasion, these preferred monomers preferably account for 40% by weight ratio. The term, for example, "(meth)acrylic" as used herein means acrylic and/or methacrylic acid.

In the practice of the present invention, the molecular weight distribution, namely the ratio (Mw/Mn) between weight average molecular weight (Mw) and number average molecular weight (Mn) as determined by gel permeation chromatography, of the vinyl polymer is not particularly restricted but is preferably less than 1.8, more preferably not more than 1.7, still more preferably not more than 1.6, further preferably not more than 1.5, particularly preferably not more than 1.4, most preferably not more than 1.3. In the practice of the invention, GPC measurements are generally carried out using polystyrene gel columns with chloroform as a mobile phase, and the number average molecular weight or the like can be determined on the polystyrene equivalent basis.

In the practice of the invention, the number average molecular weight of the vinyl polymer is not particularly restricted but is preferably within the range of 500 to 1,000,000, more preferably 1,000 to 100,000, still more preferably 5,000 to 50,000, as determined by gel permeation chromatography.

### <Method of main chain synthesis>

Although, in the practice of the present invention, the method of synthesizing the vinyl polymer is not restricted, controlled radical polymerization is preferred, living radical polymerization is more preferred, and atom transfer radical polymerization is particularly preferred. In the following, these are explained.

### Controlled radical polymerization

Radical polymerization methods can be classified into "ordinary radical polymerization methods" which comprise merely copolymerizing a monomer having a specific functional group and a vinyl monomer(s) using an azo compound, a peroxide or the like as a polymerization initiator, and "controlled radical polymerization methods" by which a specific functional group can be introduced into a controlled site(s), for example a terminus or termini.

"Ordinary radical polymerization methods" are simple and easy to perform but allow the monomer having the specific functional group to be introduced into the polymer only at random. For obtaining polymers with a high percentage of functionalization, it is necessary to use this monomer in fairly large amounts. When, conversely, only a small amount of the monomer is used, the problem arises that the proportion of polymers formed without introduction of this specific functional group increases. Further, since they consist in free radical polymerization, there is another problem, namely only polymers having a wide molecular weight distribution and a high viscosity can be obtained.

"Controlled radical polymerization methods" can be classified into "chain transfer agent methods" which comprise carrying out polymerization using a chain transfer agent having a specific functional group(s) to give functional group-terminated vinyl polymers and "living radical polymerization methods" by which growing polymer termini can grow without undergoing termination and like reactions to give polymers with a molecular weight approximately as designed.

"Chain transfer agent methods" can give polymers with a high level of functionalization but require the use of a fairly large amount of a chain transfer agent having a specific functional group(s) relative to the initiator, hence have economical problems, inclusive of treatment-related problems. Similar to the above-mentioned "ordinary radical polymerization methods", there is also a problem that only polymers having a wide molecular weight distribution and a high viscosity can be obtained because of their consisting in free radical polymerization.

Unlike these polymerization methods, "living radical polymerization methods" hardly undergo termination reactions and can give polymers with a narrow molecular weight distribution (Mw/Mn being about 1.1 to 1.5) and make it possible to arbitrarily control the molecular weight by changing the monomer-to-initiator charge ratio, in spite of their consisting in radical polymerization said to be difficult to control because of high polymerization rates and a tendency toward occurrence of termination reactions, owing to radical-to-radical coupling or the like.

Therefore, "living radical polymerization methods" are more preferred as the methods of producing the specific functional group-containing vinyl polymers mentioned above, since they can give polymers having narrow molecular weight distribution and a low viscosity and, in addition, make it possible to introduce specific functional group-containing monomers into the polymers at almost arbitrary sites.

The term "living polymerization", in its narrow sense, means a mode of polymerization in which molecular chains grow while their terminus or termini always retain activity. In the ordinary sense, however, the term also includes the mode of pseudo-living polymerization in which molecular chains grow while terminally inactivated ones and terminally activated ones are in equilibrium. The latter definition applies also in the present invention.

In recent years, "living radical polymerization methods" have actively been studied by a number of groups of researchers. For example, there may be mentioned the one using a cobalt porphyrin complex, as described in the Journal of the American Chemical Society (J. Am. Chem. Soc.), 1994, vol. 116, page 7943, the one using a radical capping agent, such as a nitroxide compound, as described in Macromolecules, 1994, vol. 27, page 7228, and "atom transfer radical polymerization" (ATRP) using an organic halide or the like as an initiator and a transition metal complex as a catalyst.

Among the "living radical polymerization methods", the "atom transfer radical polymerization", by which vinyl monomers are polymerized using an organic halide or halosulfonyl compound, for instance, as an initiator and a transition metal complex as a catalyst, is more preferred as the method of producing specific functional group-containing vinyl polymers, since it not only has the characteristic features of "living radical polymerization" but also gives polymers having a terminal halogen atom(s) relatively useful for functional group conversion reactions and, further, the degree of freedom is large in initiator and catalyst designing. As examples of this atom transfer radical polymerization, there may be mentioned those described in Matyjaszewski et al.: J. Am. Chem. Soc., 1995, vol. 117, page 5614, Macromolecules, 1995, vol. 28, page 7901, Science, 1996, vol. 272, page 866, WO 96/30421, WO 97/18247, WO 98/01480, WO 98/40415 and Sawamoto et al.: Macromolecules, 1995, vol. 28, page 1721, Japanese Kokai Publication Hei-09-208616 and Japanese Kokai Publication Hei-08-41117, etc.

Which of such living radical polymerization methods is to be used is not particularly restricted in the practice of the present invention. Preferred, however, is the atom transfer radical polymerization.

In the following, this living radical polymerization is described in detail. Prior thereto, one mode of controlled radical polymerization, namely polymerization using a chain transfer agent, which can be used in producing vinyl polymers, as described later herein, is described. The radical polymerization using a chain transfer agent (telomer) is not particularly restricted but includes, for example, the following two methods for producing vinyl polymers having a terminal structure(s) suited for being utilized in the practice of the present invention.

One method is to obtain halogen-terminated polymers by using a halogenated hydrocarbon as a chain transfer agent, as described in Japanese Kokai Publication Hei-04-132706, and the other method is to obtain hydroxyl group-terminated polymers using a hydroxyl group-containing mercaptan or a hydroxyl group-containing polysulfide or the like as a chain transfer agent, as described in Japanese Kokai Publication Sho-61-271306, JP 2594402 or Japanese Kokai Publication Sho-54-47782.

The living radical polymerization is now described.

First, the technique which uses a radical capping agent such as a nitroxide compound is described. In this polymerization, a nitroxy free radial (=N-O-), which is generally stable, is used as a radical capping agent. Such compound includes, as preferred species, but is not limited to, 2,2,6,6-tetrasubstituted-1-piperidinyloxy radicals, 2,2,5,5-tetrasubstituted-1-pyrrolidinyloxy radicals and other cyclic hydroxyamine-derived nitroxy free radicals. Suitable as the substituent are alkyl groups containing not more than 4 carbon atoms, such as methyl or ethyl group. Specific nitroxy free radical compounds include, but are not limited to, 2,2,6,6-tetramethyl-1-piperidinyloxy radical (TEMPO), 2, 2, 6, 6-tetraethyl-1-piperidinyloxy radical, 2, 2, 6, 6-tetramethyl-4-oxo-1-piperidinyloxy radical, 2,2,5,5-tetramethyl-1-pyrrolidinyloxy radical, 1,1,3,3-tetramethyl-2-isoindolinyloxy radical and N,N-di-tert-butylamineoxy radical, etc. It is also possible to use other stable free radicals, such as galvinoxyl free radical, in lieu of nitroxy free radicals.

The above radical capping agent is used in combination with a radical generator. Presumably, a reaction product formed from the radical capping agent and radical generator serves as a polymerization initiator to allow the polymerization of an addition-polymerizable monomer(s) to proceed. Although the ratio between both is not particularly restricted, the radical generator is used appropriately in an amount of 0.1 to 10 moles per mole of the radical capping agent.

While various compounds can be used as the radical generator, a peroxide capable of generating a radical under polymerization temperature conditions is preferred. Such peroxide includes, but is not limited to, diacyl peroxides such as benzoyl peroxide and lauroyl peroxide; dialkyl peroxides such as dicumyl peroxide and di-tert-butyl peroxide; peroxycarbonates such as diisopropyl peroxydicarboante and bis(4-tert-butylcyclohexyl) peroxydicarbonate; and alkyl peresters such as tert-butyl peroxyoctoate and tert-butyl peroxybenzoate. In particular, benzoyl peroxide is preferred. Further, other radical generators, for example radical-generating azo compounds such as azobisisobutyronitrile can be used in lieu of peroxides.

Alkoxyamine compounds such as those illustrated below may be used as initiators in lieu of the combined use of a radical capping agent and a radical generator, as reported in Macromolecules, 1995, vol. 28, page 2993.

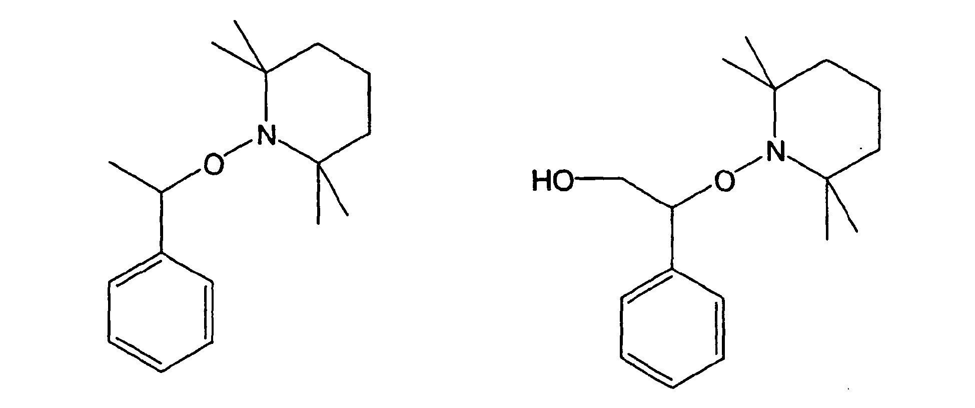

When an alkoxyamine compound is used as an initiator and that compound is one having a functional group, for example a hydroxyl group, such as the one illustrated above, functional group-terminated polymers can be obtained. When this is utilized in the practice of the present invention, functional group-terminated polymers can be obtained.

The polymerization conditions, including monomer(s), solvent and polymerization temperature, to be used in the above-mentioned polymerization using a radical capping agent such as a nitroxide compound are not particularly restricted but may be the same as those used in the atom transfer radical polymerization mentioned below.

### Atom transfer radical polymerization

Now, the atom transfer radical polymerization method, which is more preferred as the living radical polymerization in carrying out the present invention is described.

In this atom transfer radical polymerization, an organic halide, in particular a highly reactive carbon-halogen bond-containing organic halide (e.g. a carbonyl compound having a halogen at an α-position or a compound having a halogen at a benzyl position), a halosulfonyl compound or the like is used as an initiator.

Specific examples are as follows:
C₆H₅-CH₂X, C₆H₅-C (H) (X) CH₃, C₆H₅-C (X) (CH₃) ₂
(in the above chemical formulas, C₆H₅ is a phenyl group and X is a chlorine, bromine or iodine);
R¹-C (H) (X) -CO₂R², R¹-C (CH₃) (X)-CO₂R², R¹-C(H) (X)-C(O)R², R¹-C(CH₃) (X)-C(O)R²
(in the above formulas, R¹ and R² each is a hydrogen atom or an alkyl, aryl or aralkyl group containing 1 to 20 carbon atoms and X is a chlorine, bromine or iodine);

R¹-C₆H₄-SO₂X

(in the above formula, R¹ is a hydrogen atom or an alkyl, aryl or aralkyl group containing 1 to 20 carbon atoms and X is a chlorine, bromine or iodine); and the like.

An organic halide or halosulfonyl compound having the other functional group than the functional group for initiating the polymerization may also be used as the initiator in atom transfer radical polymerization. In such case, vinyl polymers having that functional group at one main chain terminus and the structure of the growing terminus in atom transfer radical polymerization at the other main chain terminus are produced. As such a functional group, there may be mentioned alkenyl, crosslinking silyl, hydroxyl, epoxy, amino and amide groups, etc.

The alkenyl group-containing organic halide is not particularly restricted but includes, for example, those having a structure represented by the general formula (2):

R⁴R⁵C(X)-R⁶-R7-C (R³)=CH₂ (2)

(in the formula, R³ is a hydrogen atom or a methyl group; R⁴ and R⁵ each is a hydrogen atom or a univalent alkyl, aryl or aralkyl group containing 1 to 20 carbon atoms or they may be connected each other at the respective other ends; R⁶ is -C(O)O- (ester group), -C(O)- (keto group) or an o-, m- or p-phenylene group; R⁷ is a direct bond or a divalent organic group containing 1 to 20 carbon atoms which may contain one or more ether bonds; and X is a chlorine, bromine or iodine.)

As specific examples of the substituent R⁴ and R⁵, there may be mentioned a hydrogen atom, and methyl, ethyl, n-propyl, isopropyl, butyl, pentyl, hexyl and like groups. R⁴ and R⁵ may be connected to each other at the respective other ends to form a cyclic skeleton.

As specific examples of the alkenyl-containing organic halide represented by the general formula (2), there may be mentioned the following:
XCH₂C(O)O(CH₂)ₙCH=CH₂, H₃CC(H) (X)C(O)O(CH₂)ₙCH=CH₂, (H₃C) _{Z}C (X) C (O) O (CH₂) ₙCH=CH₂, CH₃CH₂C (H) (X) C (O) O (CH₂) ₙCH=CH₂, 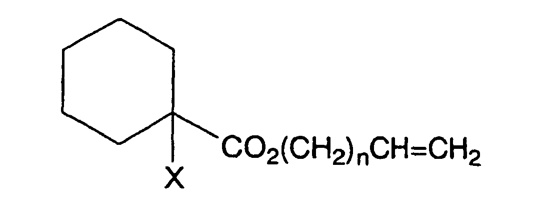 (in the above formulas, X is a chlorine, bromine or iodine and n is an integer of 0 to 20);
XCH₂C (O) O (CH₂) ₙO (CH₂)ₘCH=CH₂,
H₃CC (H) (X) C (O) O (CH₂) ₙO (CH₂) ₘCH=CH₂,
(H₃C) ₂C (X) C(O)O (CH₂) ₙO (CH₂) ₘCH=CH₂,
CH₃CH₂C (H) (X) C (O) 0 (CH₂) ₙO (CH₂) ₘCH=CH₂, 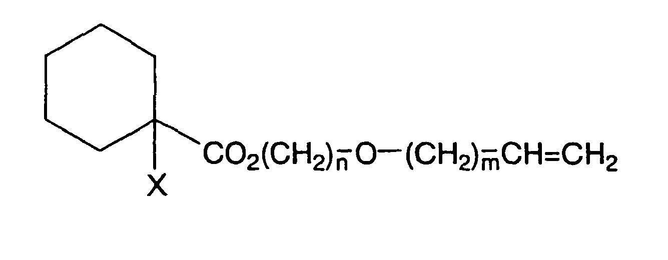 (in the above formulas, X is a chlorine, bromine or iodine, n is an integer of 1 to 20 and m is an integer of 0 to 20); o-, m-, p-XCH₂-C₆H₄-(CH₂)ₙ-CH=CH₂, o-, m-, p-CH₃C(H) (X)-C₆H₄-(CH₂) ₙ-CH=CH₂, o-, m-, p-CH₃CH₂C (H) (X)-C₆H₄-(CH₂)ₙ-CH=CH₂ (in the above formulas, X is a chlorine, bromine or iodine and n is an integer of 0 to 20);
O-, m-, p-XCH₂-C₆H₄-(CH₂)ₙ-O-(CH₂)ₘ-CH=CH₂, o-, m-, p-CH₃C(H)(X)-C₆H₄-(CH₂)ₙ-O-(CH₂)ₘ-CH=CH₂, o-, m-, p-CH₃CH₂C (H) (X) -C₆H₄- (CH₂)ₙ-O- (CH₂)ₘ-CH=CH₂
(in the above formulas, X is a chlorine, bromine or iodine, n is an integer of 1 to 20 and m is an integer of 0 to 20); o-, m-, p-XCH₂-C₆H₄-O-(CH₂)ₙ-CH=CH₂, o-, m-, p-CH₃C (H) (X) - C₆H₄-O- (CH₂) -CH=CH₂, o-, m-, p-CH₃CH₂C (H) (X) -C₆H₄- (CH₂) ₙ-CH=CH₂
(in the above formulas, X is a chlorine, bromine or iodine and n is an integer of 0 to 20);
o-, m-, p-XCH₂-C₆H₄-O-(CH₂)ₙ-O-(CH₂)ₘ-CH=CH₂, o-, m-, p-CH₃C(H)(X)-C₆H₄-O-(CH₂)ₙ-O-(CH₂)ₘ-CH=CH₂, O-, m-, p-CH₃CH₂C (H) (X) -C₆H₄-O- (CH₂) ₙ-O- (CH₂) ₘ-CH=CH₂
(in the above formulas, X is a chlorine, bromine or iodine atom, n is an integer of 1 to 20 and m is an integer of 0 to 20).

As the alkenyl group-containing organic halide, there may further be mentioned compounds represented by the general formula (3):

CH₂=C(R³) -R⁷-C (R⁴) (X) -R⁸-R⁵ (3)

(in the formula, R³, R⁴, R⁵, R⁷ and X are as defined above and R⁸ represents a direct bond, -C(O)O- (ester group), - C(O)- (keto group) or an o-, m- or p-phenylene group).

R⁶ is a direct bond or a divalent organic group (which may contain one or more ether bonds) containing 1 to 20 carbon atoms. When it is a direct bond, a vinyl group is bound to the carbon atom to which a halogen is bound, whereby an allyl halide compound is formed. In this case, the carbon-halogen bond is activated by the neighboring vinyl group, so that R⁸ is not always required to be a C(O)O or phenylene group but may be a direct bond. When R⁷ is other than a direct bond, R⁸ may preferably be a C(O)O, C(O) or phenylene group so that the carbon-halogen bond may be activated.

Specific examples of the compound of the general formula (2) are as follows:
CH₂=CHCH₂X, CH₂=C (CH₃) CH₂X, CH₂=CHC (H) (X) CH₃, CH₂=C (CH₃) C (H) (X) CH₃, CH₂=CHC (X) (CH₃)₂, CH₂=CHC (H) (X) C₂H₅, CH₂=CHC (H) (X) CH (CH₃)₂, CH₂=CHC (H) (X) C₆H₅, CH₂=CHC (H) (X) CH₂C₆H₅, CH₂=CHCH₂C (H) (X) -CO₂R, CH₂=CH (CH₂) ₂C (H) (X) -CO₂R, CH₂=CH (CH₂)₃C (H) (X) -CO₂R, CH₂=CH (CH₂)₈C (H) (X) -CO₂R, CH₂=CHCH₂C(H) (X)-C₆H₅, CH₂=CH (CH₂)₂C (H) (X)-C₆H₅, CH₂=CH (CH₂) ₃C (H) (X) -C₆H₅
(in the above formulas, X is a chlorine, bromine or iodine and R is an alkyl, aryl or aralkyl group containing 1 to 20 carbon atoms), etc.

The following may be mentioned as specific examples of the alkenyl group-containing halosulfonyl compound: o-, m-, p-CH₂=CH-(CH₂)ₙ-C₆H₄-SO₂X, o-, m-, p-CH₂=CH-(CH₂)ₙ-O-C₆H₄-SO₂X
(in the above formulas, X is a chlorine, bromine or iodine and n is an integer of 0 to 20); etc.

The above-mentioned crosslinking silyl group-containing organic halide is not particularly restricted but includes, for example, compounds having a structure represented by the general formula (4):

R⁴R⁵C(X)-R⁶-R⁷-C(H) (R³)-CH₂-[Si(R⁹)_{2-b}(Y)_{b}O]ₘ-Si(R¹⁰)₃₋ₐ(Y)ₐ (4)

(in the formula, R³, R⁴, R⁵, R⁶, R⁷ and X are as defined above, R⁹ and R¹⁰ each represents an alkyl, aryl or aralkyl group containing 1 to 20 carbon atoms or a triorganosiloxy group represented by (R')₃SiO-, R' is a univalent hydrocarbon group containing 1 to 20 carbon atoms and the three R' groups may be the same or different, and, when there are two or more R⁹ or R¹⁰ groups, they may be the same or different; Y represents a hydroxyl group or a hydrolyzable group and, when there are two or more Y groups, they may be the same or different; a represents 0, 1, 2 or 3, b represents 0, 1 or 2, and m is an integer of 0 to 19 provided that the relation a + mb ≧ 1 is satisfied).

Specific examples of the compound of the general formula (3) are as follows:
XCH₂C(O)O(CH₂)ₙSi(OCH₃)₃, CH₃C (H) (X)C(O)O(CH₂)ₙSi(OCH₃)₃, (CH₃)₂C(X)C(O)O(CH₂)ₙSi(OCH₃)₃, XCH₂C(O)O(CH₂)ₙSi(CH₃) (OCH₃)₂, CH₃C (H) (X)C(O)O(CH₂)ₙSi (CH₃) (OCH₃) ₂, (CH₃) ₂C (X) C (O) O (CH₂) ₙSi (CH₃) (OCH₃)₂
(in the above formulas, X is a chlorine, bromine or iodine and n is an integer of 0 to 20);
XCH₂C (O) O (CH₂)ₙO (CH₂)ₘSi (OCH₃)₃, H₃CC(H) (X)C(O)O(CH₂)ₙO(CH₂)ₘSi(OCH₃)₃, (CH₃)₂C (X) C (O) O(CH₂)ₙO (CH₂)ₘSi (OCH₃)₃, CH₃CH₂C(H) (X)C(O)O(CH₂)ₙO(CH₂)ₘSi(OCH₃)₃, XCH₂C (O) O (CH₂)ₙO(CH₂)ₘSi (CH₃) (OCH₃)₂, H₃CC(H) (X)C(O)O(CH₂)ₙO(CH₂)ₘSi(CH₃) (OCH₃)₂, (CH₃) ₂C (X) C (O) O (CH₂) ₙO (CH₂) ₘSi (CH₃) (OCH₃) ₂, CH₃CH₂C(H) (X)C(O)O(CH₂)ₙO(CH₂)ₘSi(CH₃) (OCH₃)₃
(in the above formulas, X is a chlorine, bromine or iodine, n is an integer of 1 to 20 and m is an integer of 0 to 20); o-, m-, p-XCH₂-C₆H₄- (CH₂)₂Si (OCH₃)₃, o-, m-, p-CH₃C (H) (X)-C₆H₄- (CH₂) ₂Si (OCH₃) ₃, o-, m-, p-CH₃CH₂C (H) (X) -C₆H₄-(CH₂)₂Si(OCH₃)₃, o-, m-, p-XCH₂-C₆H₄-(CH₂)₃Si(OCH₃)₃, o-, m-, p-CH₃C(H) (X)-C₆H₄-(CH₂)₃Si(OCH₃)₃, o-, m-, p-CH₃CH₂C(H) (X)-C₆H₄-(CH₂)₃Si(OCH₃)₃, o-, m-, p-XCH₂-C₆H₄-(CH₂)2-O-(CH₂)₃Si(OCH₃)₃, o-, m-, p-CH₃C(H) (X)-C₆H₄-(CH₂)₂-O-(CH₂)₃Si(OCH₃)₃, o-, m-, p-CH₃CH₂C (H) (X) -C₆H₄- (CH₂) ₂-O-(CH₂)₃Si(OCH₃)₃, o-, m-, p-XCH₂-C₆H₄-O-(CH₂)₃Si(OCH₃)₃, o-, m-, p-CH₃C (H) (X)-C₆H₄-O-(CH₂)₃Si(OCH₃)₃, o-, m-, p-CH₃CH₂C(H) (X) - C₆H₄-0- (CH₂) ₃-Si (OCH₃)₃, o-, m-, p-XCH₂-C₆H₄-O- (CH₂) ₂-O- (CH₂)₃-Si(OCH₃)₃, o-, m-, p-CH₃C (H) (X)-C₆H₄-O-(CH₂)₂-O-(CH₂)₃Si(OCH₃)₃, o-, m- , p-CH₃CH₂C (H) (X) -C₆H₄-O- (CH₂) ₂-O-(CH₂) ₃Si (OCH₃) ₃
(in the above formulas, X is a chlorine, bromine or iodine); etc.

As further examples of the above-mentioned crosslinking silyl group-containing organic halide, there may be mentioned compounds having a structure represented by the general formula (5):

(R¹⁰)₃₋ₐ(Y)ₐSi-[Osi(R⁹)_{2-b}(Y)_{b}]ₘ-CH₂-C(H) (R³)-R⁷- C (R⁴) (X)-R⁸-R⁵ (5)

(in the formula, R³, R⁴, R⁵, R⁷, R⁸, R⁹, R¹⁰, a, b, m, X and Y are as defined above).

Specific examples of such compound are as follows:
(CH₃O) ₃SiCH₂CH₂C (H) (X) C₆H₅, (CH₃O) ₂ (CH₃) SiCH₂CH₂C (H) (X) C₆H₅, (CH₃O) ₃Si (CH₂) ₂C (H) (X) -CO₂R, (CH₃O) ₂ (CH₃) Si (CH₂) ₂C (H) (X) -CO₂R, (CH₃O) ₃Si (CH₂) ₃C (H) (X) -CO₂R, (CH₃O) ₂ (CH₃) Si (CH₂) ₃C (H) (X) -CO₂R, (CH₃O) ₃Si (CH₂) ₄C (H) (X) -CO₂R, (CH₃O) ₂ (CH₃) Si (CH₂) ₄C (H) (X) -CO₂R, (CH₃O) ₃Si (CH₂) ₉C (H) (X) -CO₂R, (CH₃O) ₂ (CH₃) Si (CH₂) ₉C (H) (X) -CO₂R, (CH₃O) ₃Si (CH₂) ₃C (H) (X) -C₆H₅, (CH₃O) ₂ (CH₃) Si (CH₂) ₃C (H) (X) -C₆H₅, (CH₃O) ₃Si (CH₂) ₄C (H) (X) -C₆H₅, (CH₃O) ₂ (CH₃) Si (CH₂) ₄C (H) (X) -C₆H₅
(in the above formulas, X is a chlorine, bromine or iodine and R is an alkyl, aryl or aralkyl group containing 1 to 20 carbon atoms); etc.

The above-mentioned hydroxyl group-containing organic halide or halosulfonyl compound is not particularly restricted but includes, for example, the following: HO- (CH₂)ₙ-OC(O)C(H) (R) (X)
(in the formula, X is a chlorine, bromine or iodine, R is a hydrogen atom or an alkyl, aryl or aralkyl group containing 1 to 20 carbon atoms and n is an integer of 1 to 20).

The above-mentioned amino group-containing organic halide or halosulfonyl compound is not particularly restricted but includes, for example, the following: H₂N-(CH₂)ₙ-OC(O)C(H) (R) (X)
(in the formula, X is a chlorine, bromine or iodine, R is a hydrogen atom or an alkyl, aryl or aralkyl group containing 1 to 20 carbon atoms and n is an integer of 1 to 20).

The above-mentioned epoxy group-containing organic halide or halosulfonyl compound is not particularly restricted but includes, for example, the following: 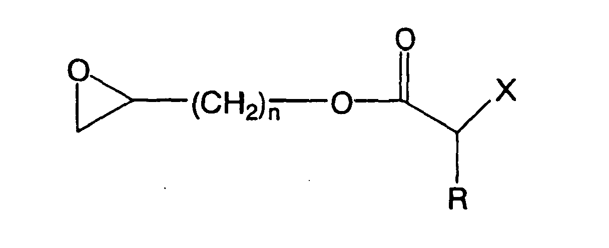 (in the formula, X is a chlorine, bromine or iodine, R is a hydrogen atom or an alkyl, aryl or aralkyl group containing 1 to 20 carbon atoms and n is an integer of 1 to 20).

For obtaining polymers having two or more growing terminal structures per molecule, an organic halide or halosulfonyl compound having two or more initiation points is preferably used as the initiator. As specific examples, there may be mentioned the following:
o,m,p-X-CH₂-C₆H₄-CH₂-X 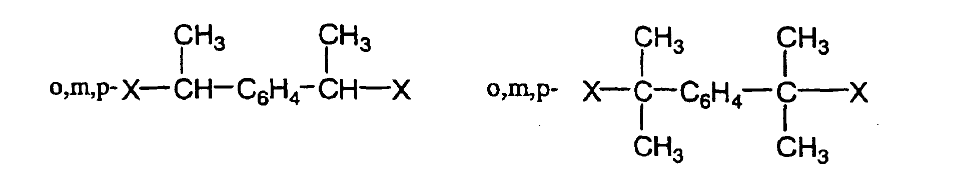 (in the formulas, C₆H₄ is a phenylene group and X is a chlorine, bromine or iodine.) 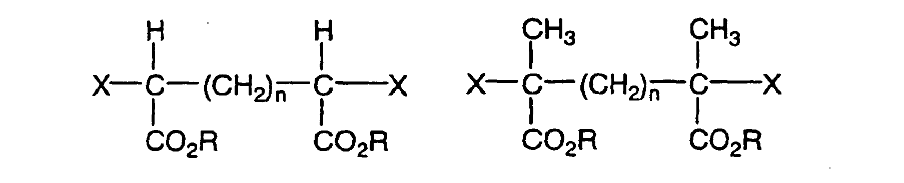 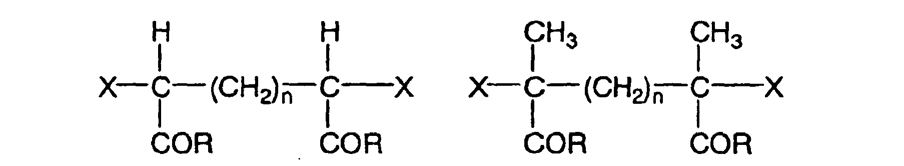 (in the formulas, R is an alkyl, aryl or aralkyl group containing 1 to 20 carbon atoms; n is an integer of 0 to 20; and X is a chlorine, bromine or iodine.) 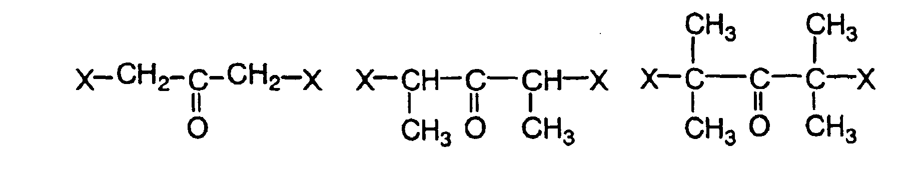 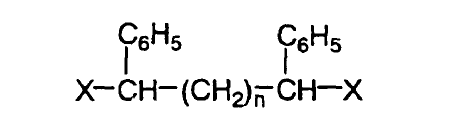 (In the formulas, X is a chlorine, bromine or iodine and n is an integer of 0 to 20.) 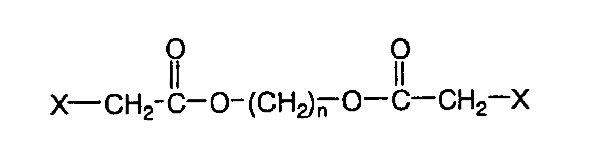 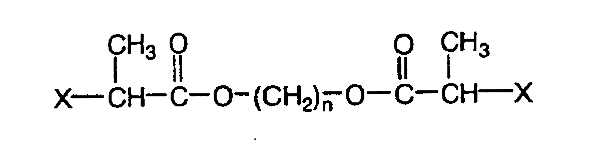 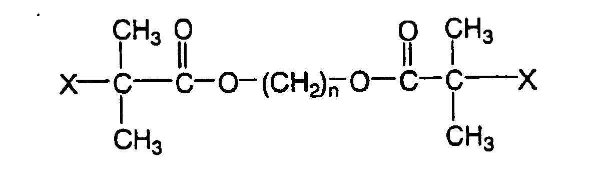 (In the formulas, n is an integer of 0 to 20 and X is a chlorine, bromine or iodine.) 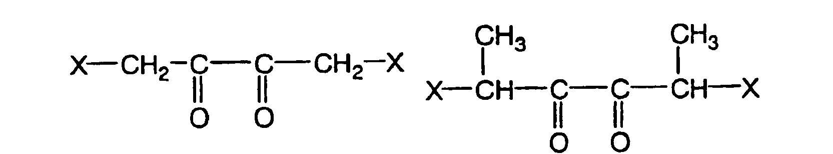 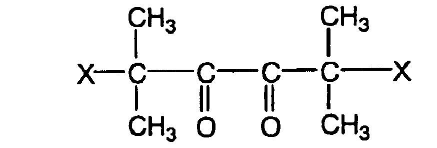 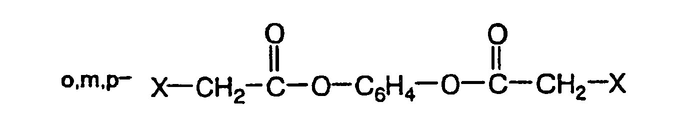 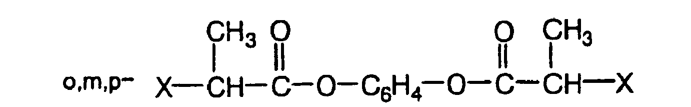 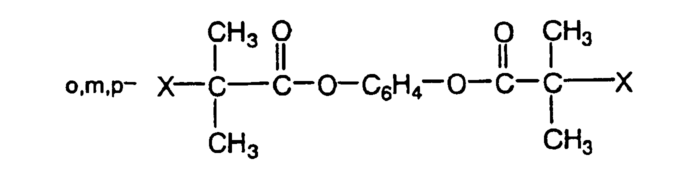 o,m,p- X-SO₂-C₆H₄-SO₂-X
(In the formulas, X is a chlorine, bromine or iodine.)

The vinyl monomers to be used in this polymerization are not particularly restricted but all those monomers mentioned hereinabove as examples can suitably be used.

The transition metal complex to be used as the polymerization catalyst is not particularly restricted but preferably is a metal complex containing, as the central atom, an element of the group 7, 8, 9, 10 or 11 of the periodic table. More preferred are complexes of zero-valence copper, univalent copper, divalent ruthenium, divalent iron or divalent nickel. Copper complexes are preferred among others. Specific examples of the univalent copper compound are cuprous chloride, cuprous bromide, cuprous iodide, cuprous cyanide, cuprous oxide and cuprous perchlorate. When such a copper compound is used, a ligand such as 2,2'-bipyridyl or a derivative thereof, 1,10-phenanthroline or a derivative thereof or a polyamine such as tetramethylethylenediamine, pentamethyldiethylenetriamine or hexamethyltris(2-aminoethyl)amine is added for increasing the catalytic activity. Nitrogen-containing compounds are preferred ligands, chelate-forming nitrogen-containing compounds are more preferred ligands, and N,N,N',N",N"-pentamethyldiethylenetriamine is still more preferred ligand. The tristriphenylphosphine complexes of divalent ruthenium chloride (RuCl₂(PPh₃)₃) is also suited for use as the catalyst. When such a ruthenium compound is used as the catalyst, an aluminum alkoxide is added as an activator. Furthermore, the divalent iron-bistriphenylphosphine complex (FeCl₂(PPh₃)₂), the divalent nickel-bistriphenylphosphine complex (NiCl₂(PPh₃)₂), and the divalent nickel-bistributylphosphine complex (NiBr₂(PBU₃)₂) are also suited for use as the catalyst.

The polymerization can be carried out without using solvent or in the presence of various solvents. As the solvent species, there may be mentioned hydrocarbon solvents such as benzene and toluene; ether solvents such as diethyl ether and tetrahydrofuran; halogenated hydrocarbon solvents such as methylene chloride and chloroform; ketone solvents such as acetone, methyl ethyl ketone and methyl isobutyl ketone; alcohol solvents such as methanol, ethanol, propanol, isopropanol, n-butyl alcohol and tert-butyl alcohol; nitrile solvents such as acetonitrile, propionitrile and benzonitrile; ester solvents such as ethyl acetate and butyl acetate; carbonate solvents such as ethylene carbonate and propylene carbonate, and the like. These may be used singly or two or more of them may be used in admixture.

The polymerization can be carried out within the temperature range of 0°C to 200°C, preferably 50 to 150°C, although this has no restrictive meaning.

The atom transfer radical polymerization to be performed in the practice of the present invention includes the so-called reverse atom transfer radical polymerization as well. In reverse atom transfer radical polymerization, contrary to a higher oxidation state resulting from radical generation by an ordinary atom transfer radical polymerization catalyst, for example Cu(II') when Cu(I) is used as the catalyst, an equilibrium state similar to that in atom transfer radical polymerization is brought about as a result of the action of an ordinary radical initiator such as an peroxide (see Macromolecules, 1999, vol. 32, page 2872).

### <Functional groups>

### Number of crosslinking silyl groups

The number of crosslinking silyl groups in the vinyl polymer is not particularly restricted but, from the viewpoint of composition curability and curing product physical properties, on an average, is not less than 1, more preferably not less than 1.1 but not more than 4.0, still more preferably not less than 1.2 but not more than 3.5.

### Sites of crosslinking silyl groups

In cases where the curing products resulting from curing of the curable composition of the present invention are required to have rubber-like properties, it is preferred that at least one crosslinking functional group be located at a terminus of the molecular chain so that the molecular weight between crosslinking points, which has a great influence on the rubber elasticity, can be increased. More preferably, all crosslinking functional groups are located at molecular chain termini.

Methods of producing vinyl polymers, in particular (meth)acrylic polymers, having at least one crosslinking silyl group such as mentioned above at a molecular terminus thereof are disclosed in Japanese Kokoku Publication Hei-03-14068, Japanese Kokoku Publication Hei-04-55444 and Japanese Kokai Publication Hei-06-211922, etc. However, these methods are free radical polymerization methods in which the above-mentioned "chain transfer agent method" is used and, therefore, the polymers obtained generally have problems, namely they have a molecular weight distribution represented by Mw/Mn as wide as not less than 2 as well as a high viscosity, although they have crosslinking silyl groups, in relatively high proportions, at molecular chain termini. Therefore, for obtaining vinyl polymers having a narrow molecular weight distribution and a low viscosity and having crosslinking silyl groups, in high proportions, at molecular chain termini, the above-mentioned "living radical polymerization method" is preferably used.

In the following, an explanation is made of these functional groups.

### Crosslinking silyl groups

As the crosslinking silyl groups to be used in the practice of the present invention, there may be mentioned those crosslinking silyl groups represented by the general formula (6) shown below in which m = 0 and a = 3, or m is an integer not less than 1 and a + mb = 3.

-[Si(R⁹)_{2-b}(Y)_{b}O]ₘ-Si(R¹⁰)₃₋ₐ(Y)ₐ (6)

(In the above formula, R⁹ and R¹⁰ each is an alkyl group containing 1 to 20 carbon atoms, an aryl group containing 6 to 20 carbon atoms, an aralkyl group containing 7 to 20 carbon atoms or a triorganosiloxy group represented by (R')₃SiO-, R' is a univalent hydrocarbon group containing 1 to 20 carbon atoms and the three R' groups may be the same or different, and, when there are two or more R⁹ or R¹⁰ groups, they may be the same or different; Y represents a hydroxyl group or a hydrolyzable group and, when there are two or more Y groups, they may be the same or different; a represents 0, 1, 2 or 3, b represents 0, 1 or 2, and m is an integer of 0 to 19, provided that the relation a + mb ≧ 1 is satisfied.)

As the hydrolyzable group, there may be mentioned, for example, a hydrogen atom and those groups which are in general use, for example alkoxy, acyloxy, ketoximate, amino, amido, aminoxy, mercapto and alkenyloxy groups. Among them, alkoxy, amido and aminoxy groups are preferred. In view of mild hydrolyzability and ease of handling, alkoxy groups are particularly preferred. Among various alkoxy groups, one having smaller number of carbon atoms is higher in reactivity, namely reactivity becomes smaller in the following order; methoxy group > ethoxy group > propoxy group >···. Such an alkoxy group can be selected according to the purpose and application use.

One to three hydroxylyzable groups and/or hydroxyl groups can be bound to each silicon atom and, in the practice of the present invention, it is preferred that m = 0 and a = 3 or that m is an integer of not less than 1 and a + mb = 3. When there are two or more hydrolyzable groups or hydroxyl groups per crosslinking silyl group, they may be the same or different. The number of silicon atoms forming the crosslinking silyl group is not less than 1 and, in the case of silicon atoms connected by siloxane bond, it is preferably not more than 20. Among the crosslinking silyl groups represented by the general formula (7):

-Si(R¹⁰)₃₋ₐ (Y)ₐ (7)

(in the formula, R¹⁰, Y and a are as defined above), those provided that a is 3 are particularly preferred because of rapid curing and ease of availability. Those provided that a is 3 (e.g. trimethoxysilyl group) show a tendency toward quicker curing as compared with those provided that a is 2 (e.g. dimethoxysilyl group). In some cases, however, those provided that a is 2 are superior in storage stability or mechanical properties (e.g. elongation) to those provided that a is 3. Therefore, for obtaining products balanced among curing rate, storage stability and mechanical properties, one provided that a is 2 (e.g. dimethoxysilyl group) and one provided that a is 3 (e.g. trimethoxysilyl group) are preferably used in combination. When Y is the same, Y in the crosslinking silyl group provided with bigger number of a has higher reactivity. Therefore, by selecting various Y and a, curability and mechanical properties of the curing product can be controlled, and these can be selected according to the purpose and application use.

### <Method of silyl group introduction>

In the following, several methods of silyl group introduction into the vinyl polymer of the present invention are described without meaning any restriction.

First, methods of crosslinking silyl, alkenyl or hydroxyl group introduction by terminal functional group conversion are described. These functional groups each can serve as a precursor of another and, therefore, mention is made in the order from crosslinking silyl groups to respective precursors.

The following may be mentioned as methods of synthesizing vinyl polymers having at least one crosslinking silyl group:
(A) Method comprising causing a crosslinking silyl group-containing hydrosilane compound to add to a vinyl polymer having at least one alkenyl group in the presence of a hydrosilylation catalyst;
(B) Method comprising reacting a vinyl polymer having at least one hydroxyl group with a compound having, per molecule, a crosslinking silyl group and a group capable of reacting with the hydroxyl group, such as an isocyanato group;
(C) Method comprising subjecting a compound having, per molecule, a polymerizable alkenyl group and a crosslinking silyl group to reaction in synthesizing a vinyl polymer by radical polymerization;
(D) Method comprising using a crosslinking silyl group-containing chain transfer agent in synthesizing a vinyl polymer by radical polymerization; and
(E) Method comprising reacting a vinyl polymer having at least one highly reactive carbon-halogen bond with a compound having, per molecule, a crosslinking silyl group and a stable carbanion.

The vinyl polymer having at least one alkenyl group, which is to be used in the above method (A) can be obtained by various methods. Several methods of synthesis are mentioned below, without meaning any restriction, however.
(A-a) Method comprising subjecting to reaction a compound having both a polymerizable alkenyl group and a low polymerizable alkenyl group per molecule, such as one represented by the general formula (9) given below as a second monomer in synthesizing a vinyl polymer by radical polymerization:

   H₂C=C (R¹⁴) -R¹⁵-R¹⁶-C (R¹⁷) =CH₂ (9)
(in the formula, R¹⁴ represents a hydrogen atom or a methyl group, R¹⁵ represents -C(O)O- or an o-, m- or p-phenylene group, R¹⁶ represents a direct bond or a divalent organic group containing 1 to 20 carbon atoms, which may contain one or more ether bonds, and R¹⁷ represents a hydrogen atom, an alkyl group containing 1 to 20 carbon atoms, an aryl group containing 6 to 20 carbon atoms or an aralkyl group containing 7 to 20 carbon atoms).

The time for subjecting to reaction the compound having both a polymerizable alkenyl group and a low polymerizable alkenyl group per molecule is not particularly restricted but, in particular in living radical polymerization and when rubber-like properties are expected, the compound is preferably subjected to reaction as a second monomer at the final stage of polymerization reaction or after completion of the reaction of a main chain monomer(s).
(A-b) Method comprising subjecting to reaction a compound having at least two low polymerizable alkenyl groups, for example 1,5-hexadiene, 1,7-octadiene or 1,9-decadiene, at the final stage of polymerization reaction or after completion of the reaction of a main chain monomer(s) in synthesizing a vinyl polymer by living radical polymerization.
(A-c) Method comprising reacting a vinyl polymer having at least one highly reactive carbon-halogen bond with one of various alkenyl group-containing organometallic compounds, for example an organotin such as allyltributyltin or allyltrioctyltin, for substitution of the halogen.
(A-d) Method comprising reacting a vinyl polymer having at least one highly reactive carbon-halogen bond with a stabilized, alkenyl group-containing carbanion such as one represented by the general formula (10):

   M⁺C⁻ (R¹⁸) (R¹⁹) -R²⁰-C (R¹⁷) =CH₂ (10)
(in the formula, R¹⁷ is as defined above, R¹⁸ and R¹⁹ each is an electron-attracting group stabilizing the carbanion C⁻ or one of them is the above electron-attracting group and the other represents a hydrogen atom, an alkyl group containing 1 to 10 carbon atoms or a phenyl group, R²⁰ represents a direct bond or a divalent organic group containing 1 to 10 carbon atoms, which may contain one or more ether bonds, and M⁺ represents an alkali metal ion or a quaternary ammonium ion).

Particularly preferred as the electron-attracting group R¹⁸ and/or R¹⁹ are those having a structure of -CO₂R, -C(O)R or -CN.
(A-e) Method comprising reacting a vinyl polymer having at least one highly reactive carbon-halogen bond with a simple substance metal, such as zinc, or an organometallic compound and then reacting the thus-prepared enolate anion with an alkenyl group-containing, electrophilic compound, such as an alkenyl group-containing compound having a leaving group such as a halogen atom or an acetyl group, an alkenyl group-containing carbonyl compound, an alkenyl group-containing isocyanate compound or an alkenyl-containing acid halide.
(A-f) Method comprising reacting a vinyl polymer having at least one highly reactive carbon-halogen bond with an alkenyl group-containing oxy anion or carboxylate anion such as one represented by the general formula (11) or (12), for substitution of the halogen:

   H₂C=C (R¹⁷) -R²¹-O⁻M⁺ (11)
(in the formula, R¹⁷ and M⁺ are as defined above and R²¹ is a divalent organic group containing 1 to 20 carbon atoms, which may contain one or more ether bonds);

H₂C=C (R¹⁷) -R²²-C (O) O⁻M⁺ (12)

(in the formula, R¹⁷ and M⁺ are as defined above and R²² is a direct bond or a divalent organic group containing 1 to 20 carbon atoms, which may contain one or more ether bonds).

The method of synthesizing the above-mentioned vinyl polymer having at least one highly reactive carbon-halogen bond includes, but is not limited to, atom transfer radical polymerization methods using an organic halide or the like as initiator and a transition metal complex as catalyst, as mentioned above.

It is also possible to obtain the vinyl polymer having at least one alkenyl group from a vinyl polymer having at least one hydroxyl group, utilizing, for example, the methods mentioned below.
(A-g) Method comprising reacting the hydroxyl group(s) of a vinyl polymer having at least one hydroxyl group with a base, such as sodium methoxide and then reacting with an alkenyl group-containing halide, such as allyl chloride.
(A-h) Method comprising reacting such hydroxyl group(s) with an alkenyl group-containing isocyanate compound, such as allyl isocyanate.
(A-i) Method comprising reacting such hydroxyl group(s) with an alkenyl group-containing acid halide, such as (meth)acrylic acid chloride, in the presence of a base, such as pyridine.
(A-j) Method comprising reacting such hydroxyl group(s) with an alkenyl group-containing carboxylic acid, such as acrylic acid, in the presence of an acid catalyst.

In the practice of the present invention, when no halogen is directly involved in the alkenyl group introduction, as in the method (A-a) or (A-b), the vinyl polymer is preferably synthesized by living radical polymerization. From the viewpoint of ease of control, the method (A-b) is more preferred.

In cases where alkenyl group introduction is effected by conversion of the halogen atom(s) of a vinyl polymer having at least one highly reactive carbon-halogen bond, use is preferably made of a vinyl polymer having at least one highly reactive carbon-halogen bond at terminus as obtainable by subjecting a vinyl monomer(s) to radical polymerization (atom transfer radical polymerization) using an organic halide or halosulfonyl compound having at least one highly reactive carbon-halogen bond as an initiator, and a transition metal complex as a catalyst. From the viewpoint of ease of control, the method (A-f) is more preferred.

The crosslinking silyl group-containing hydrosilane compound is not particularly restricted but includes, as typical examples, those compounds represented by the general formula (13) provided that m = 0 and a = 3, or m is an integer of not less than 1 and a + mb = 3:

H- [Si (R⁹) _{2-b} (Y) _{b}O]ₘ-Si (R¹⁰) ₃₋ₐ (Y) ₐ (13)

(in the formula, R⁹ and R¹⁰ each represents an alkyl group containing 1 to 20 carbon atoms, an aryl group containing 6 to 20 carbon atoms, an aralkyl group containing 7 to 20 carbon atoms or a triorganosiloxy group represented by (R')₃SiO-, in which R' is a univalent hydrocarbon group containing 1 to 20 carbon atoms and the three R' groups may be the same or different, and, when there are two or more R⁹ or R¹⁰ groups, they may be the same or different; Y represents a hydroxyl group or a hydrolyzable group and, when there are two or more Y groups, they may be the same or different; a represents 0, 1, 2 or 3, b represents 0, 1 or 2 and m is an integer of 0 to 19, provided that the relation a + mb ≧ 1 is satisfied).

Particularly preferred among those hydrosilane compounds in view of ease of availability are compounds represented by the general formula (14) provided that a is 3:

H-Si(R¹⁰)₃₋ₐ(Y)ₐ (14)

(in the formula, R¹⁰, Y and a are as defined above).

In causing the above crosslinking silyl group-containing hydrosilane compound to add to the alkenyl group, a transition metal catalyst is generally used. The transition metal catalyst includes, for example, simple substance platinum, solid platinum dispersed in a carrier such as alumina, silica or carbon black, chloroplatinic acid, chloroplatinic acid complexes with alcohols, aldehydes, ketones or the like, platinum-olefin complexes, and platinum(0)-divinyltetramethyldisiloxane complex. As other catalysts than platinum compounds, there may be mentioned RhCl (PPh₃) ₃, RhCl₃, RuCl₃, IrCl₃, FeCl₃, AlCl₃, PdCl₂·H₂O, NiCl₂ and TiCl₄, for instance.

The method of producing the vinyl polymer having at least one hydroxyl group, which is to be used in the methods (B) and (A-g) to (A-j), specifically includes, but is not limited to, the following, among others.
(B-a) Method comprising subjecting to reaction, as a second monomer, a compound having both a polymerizable alkenyl group and a hydroxyl group per molecule, for example one represented by the general formula (15) given below, in synthesizing the vinyl polymer by radical polymerization:

   H₂C=C(R¹⁴) -R¹⁵-R¹⁶-OH (15)
(in the formula, R¹⁴, R¹⁵ and R¹⁶ are as defined above).

The time for subjecting to reaction the compound having both a polymerizable alkenyl group and a hydroxyl group per molecule is not restricted but, in particular in living radical polymerization and when rubber-like properties are expected, the compound is preferably subjected to reaction as a second monomer at the final stage of the polymerization reaction or after completion of the reaction of a main chain monomer(s).
(B-b) Method comprising subjecting an alkenyl alcohol, such as 10-undecenol, 5-hexenol or allyl alcohol, to reaction at the final stage of polymerization reaction or after completion of the reaction of a main chain monomer(s) in synthesizing the vinyl polymer by living radical polymerization.
(B-c) Method comprising subjecting a vinyl monomer(s) to radical polymerization using a hydroxyl group-containing chain transfer agent, such as a hydroxyl group-containing polysulfide, in large amounts, as described in Japanese Kokai Publication Hei-05-262808, for instance.
(B-d) Method comprising subjecting a vinyl monomer(s) to radical polymerization using hydrogen peroxide or a hydroxyl group-containing initiator, as described in Japanese Kokai Publication Hei-06-239912 and Japanese Kokai Publication Hei-08-283310, for instance.
(B-e) Method comprising subjecting a vinyl monomer(s) to radical polymerization using an alcohol in excess, as described in Japanese Kokai Publication Hei-06-116312, for instance.
(B-f) Method comprising introducing a terminal hydroxyl group(s) by hydrolyzing the halogen atom(s) of a vinyl polymer having at least one highly reactive carbon-halogen bond or by reacting such halogen atom(s) with a hydroxyl group-containing compound, as described in Japanese Kokai Publication Hei-04-132706, for instance.
(B-g) Method comprising reacting a vinyl polymer having at least one highly reactive carbon-halogen bond with a hydroxyl group-containing stabilized carbanion, such as one represented by the general formula (16) for substitution of the halogen:

   M⁺C⁻(R¹⁸) (R¹⁹) -R²⁰-OH (16)
(in the formula, R¹⁸, R¹⁹ and R²⁰ are as defined above).

Particularly preferred as the electron-attracting groups R¹⁸ and R¹⁹ are those having a structure of -CO₂R, - C(O)R or -CN.
(B-h) Method comprising reacting a vinyl polymer having at least one highly reactive carbon-halogen bond with a simple substance metal, such as zinc, or an organometallic compound and then reacting the thus-prepared enolate anion with an aldehyde or ketone.
(B-i) Method comprising reacting a vinyl polymer having at least one highly reactive carbon-halogen bond with a hydroxyl group-containing oxy anion or carboxylate anion, such as one represented by the general formula (17) or (18), for substitution of the halogen:

   HO-R²¹-O⁻M⁺ (17)

   (in the formula, R²¹ and M⁺ are as defined above);

   HO-R²²-C(O)O⁻M⁺ (18)

   (in the formula, R²² and R⁺ are as defined above).
(B-j) Method comprising subjecting to reaction, as a second monomer, a compound having a low polymerizable alkenyl group and a hydroxyl group per molecule at the final stage of the polymerization reaction or after completion of the reaction of a main chain monomer(s) in synthesizing the vinyl polymer by living radical polymerization.

Such compound is not particularly restricted but may be a compound represented by the general formula (19), for instance:

H₂C=C(R¹⁴)-(R²¹)-OH (19)

(in the formula, R¹⁴ and R²¹ are as defined above).

The compound represented by the above general formula (19) is not particularly restricted but, in view of ease of availability, alkenyl alcohols such as 10-undecenol, 5-hexenol and allyl alcohol are preferred.

In the practice of the present invention, when no halogen is directly involved in hydroxyl group introduction, as in the methods (B-a) to (B-e) and (B-j), the vinyl polymer is preferably synthesized by living radical polymerization. The method (B-b) is more preferred because of ease of control.

In cases where hydroxyl group introduction is effected by conversion of the halogen atom(s) of a vinyl polymer having at least one highly reactive carbon-halogen atom, use is preferably made of a vinyl polymer having at least one highly reactive carbon-halogen bond at terminus as obtainable by subjecting a vinyl monomer(s) to radical polymerization (atom transfer radical polymerization) using an organic halide or halosulfonyl compound as an initiator, and a transition metal complex as a catalyst. From the viewpoint of ease of control, the method (B-i) is more preferred.

As the compound having a crosslinking silyl group and a group capable of reacting with a hydroxyl group, such as an isocyanato group, per molecule, there may be mentioned, for example, γ-isocyanatopropyltrimethoxysilane, γ-isocyanatopropylmethyldimethoxysilane, γ-isocyanatopropyltriethoxysilane and the like. If necessary, any of urethane formation reaction catalysts generally known in the art can be used.

The compound having both a polymerizable alkenyl group and a crosslinking silyl group per molecule, which is to be used in the method (C) includes, for example, trimethoxysilylpropyl (meth)acrylate and like compounds represented by the general formula (20) given below provided that m = 0 and a = 3, or m is an integer of not less than 1 and a + mb = 3:

H₂C=C (R¹⁴) -R¹⁵-R²³- [Si (R⁹) 2-b (Y) _{b}O] ₘ-Si (R¹⁰) ₃₋ₐ (Y) ₐ (20)

(in the formula, R⁹, R¹⁰, R¹⁴, R¹⁵, Y, a, b and m are as defined above and R²³ is a direct bond or a divalent organic group containing 1 to 20 carbon atoms, which may contain one or more ether bonds).

The time for subjecting to reaction the compound having both a polymerizable alkenyl group and a crosslinking silyl group per molecule is not particularly restricted but, in particular in living radical polymerization and when rubber-like properties are expected, the compound is preferably subjected to reaction as a second monomer at the final stage of the polymerization reaction or after completion of the reaction of a main chain monomer(s).

As the crosslinking silyl group-containing chain transfer agent to be used in the chain transfer agent method (D), there may be mentioned crosslinking silyl group-containing mercaptans and crosslinking silyl group-containing hydrosilanes, as described in Japanese Kokoku Publication Hei-03-14068 and Japanese Kokoku Publication Hei-04-55444, for instance.

The method of synthesizing the vinyl polymer having at least one highly reactive carbon-halogen bond, which is to be used in the method (E), includes, but is not limited to, the atom transfer radical polymerization method which uses an organic halide or the like as an initiator and a transition metal complex as a catalyst, as mentioned above. As the compound having both a crosslinking silyl group and a stabilized carbanion per molecule, there may be mentioned compound represented by the general formula (21) provided that m = 0 and a = 3, or m is an integer of not less than 1 and a + mb = 3:

M⁺C⁻ (R¹⁸) (R¹⁹) -R²⁴-CH) (R²⁵)-CH₂- [Si(R⁹)_{2-b}(Y)_{b}O]ₘ-Si (R¹⁰)₃₋ₐ(Y)ₐ (21)

(in the formula, R⁹, R¹⁰, R¹⁸, R¹⁹, Y, a, b and m are as defined above, R²⁴ is a direct bond or a divalent organic group containing 1 to 10 carbon atoms, which may contain one or more ether bonds, and R²⁵ represents a hydrogen atom, an alkyl group containing 1 to 10 carbon atoms, an aryl group containing 6 to 10 carbon atoms or an aralkyl group containing 7 to 10 carbon atoms.

Particularly preferred as the electron-attracting groups R¹⁸ and R¹⁹ are those having a structure of -CO₂R,-C(O)R or -CN.

### <<Photocurable substance>>

The photocurable substance to be used in the practice of the present invention is a substance which, under the action of light, undergoes chemical changes in molecular structure in a short period of time, leading to curing and other changes in physical properties. By adding such photocurable substance, it becomes possible to reduce the stickiness (also referred to as "residual tackiness") of the curing product surface upon curing of the curable composition. The photocurable substance to be used in the practice of the invention is a substance capable of curing upon exposure to light, and a typical photocurable substance can be cured by allowing to stand at room temperature in a sunny place (near a window) in a room for 1 day, for instance. A number of compounds of this kind are known, inclusive of organic monomers, oligomers, resins, and compositions containing them. The species thereof is not particularly restricted but may be, for example, an unsaturated acrylic compound, a polyvinyl cinnamate or an azide resin.

The unsaturated acrylic compound is an unsaturated group-containing monomer represented by the general formula (22) given below or an oligomer, or a mixture thereof:

CH₂=CR²⁶CO(O)- (22)

(in the formula, R²⁶ represents a hydrogen atom, an alkyl group containing 1 to 10 carbon atoms, an aryl group containing 6 to 10 carbon atoms or an aralkyl group containing 7 to 10 carbon atoms).

As specific examples of the unsaturated acrylic compound, there may be mentioned (meth)acrylate esters of low-molecular-weight alcohols such as ethylene glycol, glycerol, trimethylolpropane, pentaerythritol and neopentyl alcohol; (meth)acrylate esters of alcohols derived from bisphenol A, isocyanuric acid or like acids or the above-mentioned low-molecular-weight alcohols by modification with ethylene oxide and/or propylene oxide; (meth)acrylate esters of hydroxyl group-terminated polyether polyols whose main chain is a polyether, polymer polyols obtainable by radical polymerization of a vinyl monomer in a polyol whose main chain is a polyether, hydroxyl group-terminated polyester polyols whose main chain is a polyester, polyols having a vinyl or (meth)acrylic polymer main chain and hydroxyl groups along the main chain thereof, and the like; epoxy acrylate oligomers obtainable by reacting an epoxy resin of the bisphenol A, novolak or the like with (meth)acrylic acid; urethane acrylate oligomers having urethane bonds and (meth)acrylic groups in the molecular chain as obtainable by reacting a polyol, a polyisocyanate and a hydroxyl group-containing (meth)acrylate, for instance.

The polyvinyl cinnamate is a photosensitive resin whose cinnamoyl groups serve as photosensitive groups. It includes cinnamic acid-esterified polyvinyl alcohol and, further, various polyvinyl cinnamate derivatives.

The azide resin is known as a photosensitive resin whose azide groups serve as photosensitive groups. It includes photosensitive rubber solutions generally containing an azide compound as a photosensitive agent and, further, various examples are described in detail in the monograph "Kankosei Jushi (Photosensitive Resins)" (published March 17, 1972 by Insatsu Gakkai Shuppanbu, page 93 ff, page 106 ff and page 117 ff). These can be used singly or in admixture, if necessary supplemented with a sensitizer.

Among the photocurable substances mentioned above, unsaturated acrylic compounds are preferred because of ease of handling.

The photocurable substance is used preferably in an amount of 0.01 to 20 parts by weight per 100 parts by weight of the vinyl polymer. When the amount is less than 0.01 part by weight, the effects are slight and, when it exceeds 20 parts by weight, adverse effects may be produced on the physical properties. In some cases, the addition of a sensitizer, such as a ketone or nitro compound, and/or a promoter, such as an amine, may result in enhanced effects.

### <<Air oxidation-curable substance>>

The air oxidation-curable substance to be used in the practice of the present invention is an unsaturated group-containing compound capable of crosslinking and curing upon oxidation by atmospheric oxygen. By adding this air oxidation-curable substance, it becomes possible to reduce the stickiness (also referred to as "residual tackiness") of the curing product surface upon curing of the curable composition. The air oxidation-curable substance to be used in the practice of the invention is a substance capable of curing when brought into contact with atmospheric oxygen and, more specifically, has an ability to react with atmospheric oxygen and thereby be cured. A typical air oxidation-curable substance can be cured when allowed to stand in the air in a room for 1 day, for instance.

As specific examples of the air oxidation-curable substance, there may be mentioned, for example, drying oils such as tung oil and linseed oil; various alkyd resins obtainable by modification of such drying oils; acrylic polymers, epoxy resins and silicone resins each modified by a drying oil; 1,2-polybutadiene, 1,4-polybutadiene, C5 to C8 diene homopolymers and copolymers and, further, various modifications of such homopolymers and copolymers (maleic modifications, boiled oil modifications, etc.). Among them, tung oil, liquid diene polymers, and modifications thereof are particularly preferred.

As specific examples of the above liquid diene polymers, there may be mentioned liquid polymers obtainable by polymerizing or copolymerizing diene compounds such as butadiene, chloroprene, isoprene and 1,3-pentadiene, NBR, SBR and like polymers obtainable by copolymerizing such diene compounds with a monomer copolymerizable with the diene compounds, for example acrylonitrile or styrene, in a manner such that the diene compounds account for the majority and, further, various modifications (maleic modifications, boiled oil modifications, etc.) thereof. These may be used singly or two or more of them may be used in combination. Among such liquid diene compounds, liquid polybutadiene is preferred.

The air oxidation-curable substances may be used singly or two or more of them may be used in combination. In some cases, the use of the air oxidation-curable substance together with a catalyst or metal drier capable of promoting the oxidation/curing reactions may bring about enhanced effects. As such catalyst or metal drier, there may be mentioned, for example, cobalt naphthenate, lead naphthenate, zirconium naphthenate, cobalt octylate, zirconium octylate and like metal salts as well as amine compounds.

The air oxidation-curable substance is added preferably in an amount of 0.01 to 20 parts by weight relative to 100 parts by weight of the vinyl polymer. When the amount is less than 0.01 part by weight, the effects are slight and, when it is in excess of 20 parts by weight, the physical properties may be adversely affected in some cases.

### <<High-molecular-weight plasticizer>>

The high-molecular-weight plasticizer to be used in the practice of the invention is a polymer having a number average molecular weight of 500 to 15,000 and, by the addition of this high-molecular-weight plasticizer, it becomes possible to adjust the viscosity and slump behavior of said curable composition as well as the tensile strength, elongation and other mechanical properties of the curing products obtainable by curing said composition and, further, maintain the initial physical properties for a long period of time and improve the dryability (also referred to as "coatability") of an alkyd coating applied to said curing products as compared with the use of a low-molecular-weight plasticizer containing no intramolecular polymer component. The high-molecular-weight plasticizer to be used in the practice of the invention does not contain any group represented by the general formula (1) given hereinabove.

The above high-molecular-weight plasticizer has a number average molecular weight of 500 to 15,000, preferably 800 to 10,000, more preferably 1,000 to 8,000. When the molecular weight is too low, the plasticizer may be leached out with the lapse of time due to heat and/or rainfall, with the result that the initial physical properties cannot be maintained for a long period of time and that the alkyd coatability cannot be improved. When the molecular weight is excessively high, the viscosity increases and the workability becomes poor.

Specific examples of such high-molecular-weight plasticizer include, but are not limited to, for example vinyl polymers obtainable by polymerizing such vinyl monomers as mentioned hereinabove by various methods; polyester plasticizers obtainable from a dibasic acid, such as sebacic acid, adipic acid, azelaic acid or phthalic acid, and a dihydric alcohol, such as ethylene glycol, diethylene glycol, triethylene glycol, propylene glycol or dipropylene glycol; polyethers such as polyether polyols, e.g. polyethylene glycol, polypropylene glycol and polytetramethylene glycol, and derivatives of these as obtainable by converting the hydroxyl group(s) of these polyether polyols to an ester, ether or the like group(s); polystyrenes such as polystyrene and poly-α-methylstyrene; polybutadiene, polybutene, polyisobutylene, butadiene-acrylonitrile copolymers, polychloroprene and chlorinated paraffins.

Among these high-molecular-weight plasticizers, those compatible with the vinyl polymer are preferred. Among them, vinyl polymers are preferred from the viewpoint of compatibility and weathering resistance and heat resistance. Among the vinyl polymers, (meth)acrylic polymers are preferred, and acrylic polymers are more preferred. As for the method of synthesizing such acrylic polymers, mention may be made of those obtainable by the conventional solution polymerization as well as solvent-free acrylic polymers. The latter acrylic plasticizers are produced by a high temperature continuous polymerization method (USP 4,414,370, Japanese Kokai Publication Sho-59-6207, Japanese Kokoku Publication Hei-05-58005, Japanese Kokai Publication Hei-01-313522, USP 5,010,166) without using any solvent or chain transfer agent, hence are more suited for the purposes of the present invention. Examples thereof are not particularly restricted but include Toagosei's UP series products (cf. October 1999 issue of Kogyo Zairyo) as well. Of course, living radical polymerization may also be mentioned as another method of synthesis. This method makes it possible to narrow the molecular weight distribution of the polymer and reduce the viscosity, hence is preferred. Further, atom transfer radical polymerization is more preferred. This does not mean any limitation, however.

The molecular weight distribution of the high-molecular-weight plasticizer is not particularly restricted but may preferably be narrow, namely less than 1.8, more preferably not more than 1.7, still more preferably not more than 1.6, further preferably not more than 1.5, in particular not more than 1.4, most preferably not more than 1.3.

The above high-molecular-weight plasticizers may be used singly or two or more of them may be used in combination. Where necessary, they may be used in combination with a low-molecular-weight plasticizer, which is to be mentioned later herein, unless the latter exerts adverse effects on the physical properties.

The above high-molecular-weight plasticizers are used in an amount of 5 to 150 parts by weight, preferably 10 to 120 parts by weight, more preferably 20 to 100 parts by weight, relative to 100 parts by weight of the vinyl polymer. When the amount is less than 5 parts by weight, the effects as a plasticizer are no more manifested and, when it is in excess of 150 parts by weight, the mechanical strength of the curing products become insufficient.

### <<Silanol-containing compound>>

The silanol-containing compound to be used in the practice of the invention includes a compound (I) having one silanol group in the molecular and/or a compound (II) capable of forming a compound having one silanol group in the molecular upon reacting with moisture. These may be used singly or both compounds may be used simultaneously.

The compound (I) having one silanol group in the molecular, which is to be used in the practice of the invention, is not particularly restricted but includes: compounds represented by (R")₃SiOH (in which the three R' groups may be the same or difference and each is a substituted or unsubstituted alkyl or aryl group), such as ((CH₃)₃SiOH, (CH₃CH₂)₃SiOH, (CH₃CH₂CH₂)₃SiOH, (n-Bu)₃SiOH, (sec-Bu)₃SiOH, (tert-Bu)₃SiOH, (tert-Bu)Si(CH₃)₂OH, (C₅H₁₁)₃SiOH, (C₆H₁₃)₃SiOH, (C₆H₅)₃SiOH, (C₆H₅)₂Si(CH₃)OH, (C₆H₅) Si (CH₃)₂OH, (C₆H₅)₂Si(C₂H₅) OH, C₆H₅Si(C₂H₅)₂OH, C₆H₅CH₂Si(C₂H₅)₂OH, and C₁₀H₇Si (CH₃)₂OH (in the above formulas, C₆H₅ represents a phenyl group and C₁₀H₇ represents a naphthyl group); silanol group-containing cyclic polysiloxane compounds such as 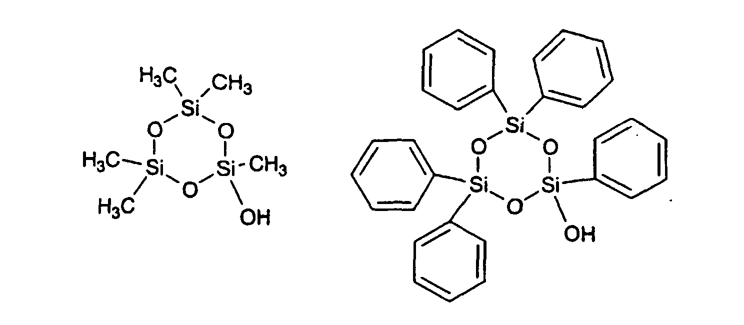 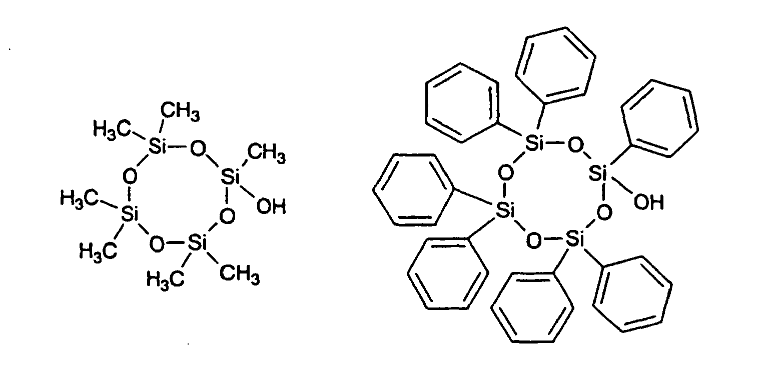 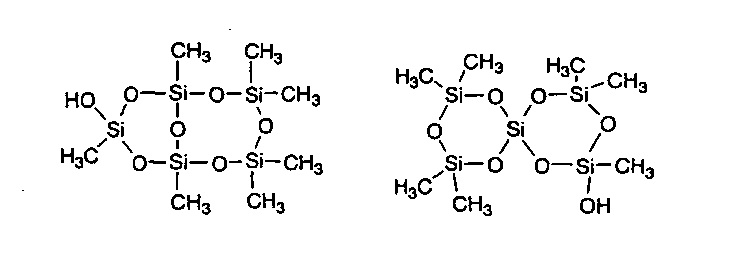 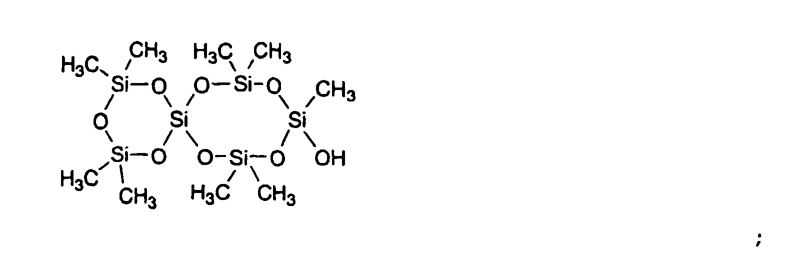 silanol group-containing linear polysiloxane compounds such as 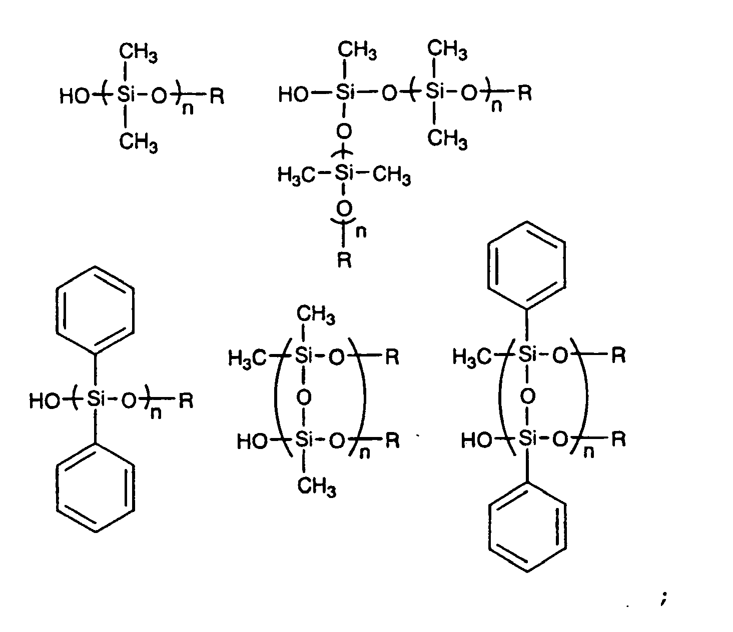 silanol group-terminated polymeric compounds whose main chain is constituted of silicon and carbon atoms, such as 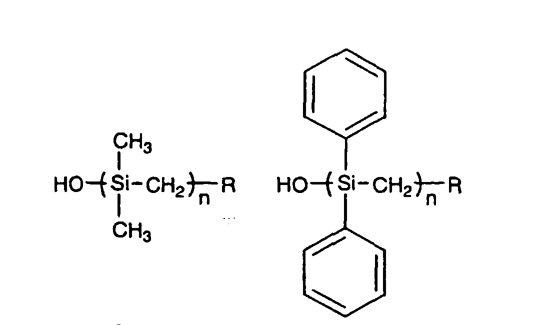 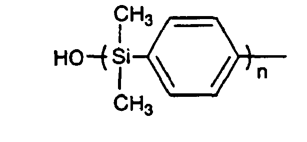 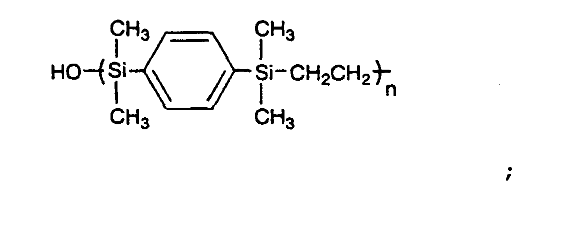 silanol group-terminated compounds having a polysilane main chain, such as 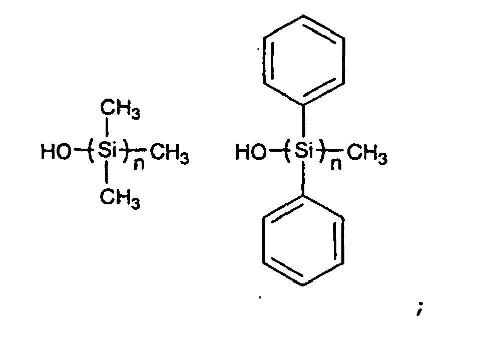 silanol group-terminated polymeric compounds whose main chain is composed of silicon, carbon and oxygen atoms, such as 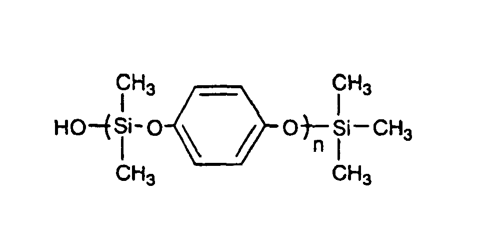 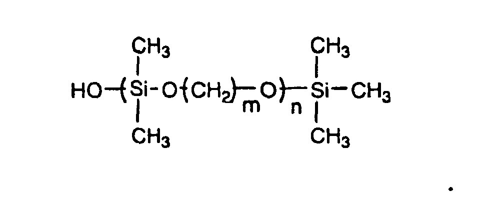 Preferred among these are compounds represented by the general formula (23) given below:

(R²⁷)₃SiOH (23)

(in the formula, R²⁷ represents a univalent hydrocarbon group containing 1 to 20 carbon atoms and the three R²⁷ groups may be the same or different).

Preferred as R²⁷ are methyl, ethyl, vinyl, tert-butyl and phenyl groups. Methyl group is more preferred.

In view of ease of availability and effects, (CH₃)₃SiOH and the like, which are small in molecular weight, are preferred among others.

Presumably, the above compound (I) having one silanol group in the molecular reacts with a crosslinking silyl group of the vinyl polymer or a siloxane bond formed upon crosslinking and thus reduces the number of crosslinking points and provide the curing products with flexibility. The compound (II) capable of forming a compound having one silanol group in the molecular upon reaction with moisture, which is also one of the components to be used in the practice of the invention, is not particularly restricted but it is preferred that the compound (hydrolysis product) having one silanol group in the molecular as formed by reaction with moisture be a compound represented by the above general formula (23). Thus, in addition to the compounds represented by the general formula (24) to be mentioned later herein, the compound (II) also includes, but is not limited to, the following compounds:
N,O-Bis(trimethylsilyl)acetamide, N-(trimethylsilyl)acetamide, bis(trimethylsilyl)trifluoroacetamide, N-methyl-N-trimethylsilyltrifluoroacetamide, bistrimethylsilylurea, N-(tert-butyldimethylsilyl)-N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyl trifluoromethanesulfonate, trimethylsilyl phenoxide, trimethylsilylation product derived from n-octanol, trimethylsilylation product derived from 2-ethylhexanol, tris(trimethylsilyl) derivative of glycerol, tris(trimethylsilyl) derivative of trimethylolpropane, tris(trimethylsilyl) derivative of pentaerythritol, tetra(trimethylsilyl) derivative of pentaerythritol, (CH₃)₃SiNHSi (CH₃)₃, (CH₃)₃SiNSi(CH₃)₂, 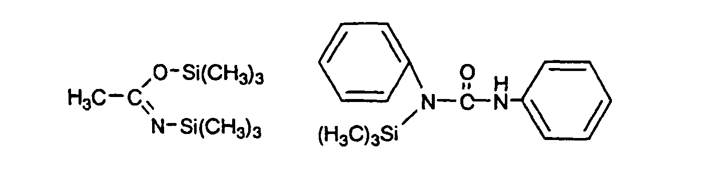 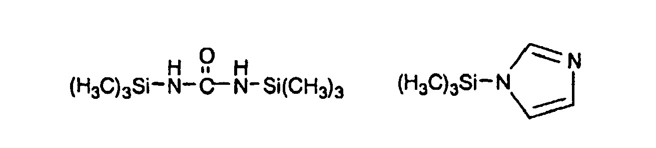 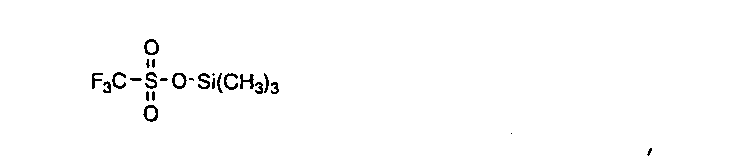
and the like can suitably be used. (CH₃)₃SiNHSi(CH₃)₃ is particularly preferred from the viewpoint of the silanol group content in hydrolysis products.

The compound (II) capable of forming a compound having one silanol group in the molecular upon reacting with moisture, which can serve as one of the components to be used in the practice of the present invention, is not particularly restricted but includes, in addition to the compounds mentioned above, compounds represented by the general formula (24) given below as preferred species:

((R²⁷)₃SiO)ₙR²⁸ (24)

(in the formula, R²⁷ is as defined above, n represents a positive integer and R²⁸ represents a group derived from an active hydrogen-containing compound by removal of a part or all of the active hydrogen atoms).

Preferred as R²⁷ are methyl, ethyl, vinyl, tert-butyl and phenyl groups. Methyl group is more preferred.

As for the (R²⁷)₃Si group, trimethylsilyl group, in which all the three R²⁷ groups each is methyl, is particularly preferred. Further, n is preferably 1 to 5.

The active hydrogen-containing compound from which the above R²⁸ is derived is not particularly restricted but includes, for example, alcohols such as methanol, ethanol, n-butanol, isobutanol, tert-butanol, n-octanol, 2-ethylhexanol, benzyl alcohol, ethylene glycol, diethylene glycol, polyethylene glycol, propylene glycol, dipropylene glycol, polypropylene glycol, propanediol, tetramethylene glycol, polytetramethylene glycol, glycerol, trimethylolpropane and pentaerythritol; phenols such as phenol, cresol, bisphenol A and hydroquinone; carboxylic acids such as formic acid, acetic acid, propionic acid, lauric acid, palmitic acid, stearic acid, behenic acid, acrylic acid, methacrylic acid, oleic acid, linolic acid, linoleic acid, sorbic acid, oxalic acid, malonic acid, succinic acid, adipic acid, maleic acid, benzoic acid, phthalic acid, terephthalic acid and trimellitic acid; ammonia; amines such as methylamine, dimethylamine, ethylamine, diethylamine, n-butylamine and imidazole; acid amides such as acetamide and benzamide; ureas such as urea and N,N'-diphenylurea; and ketones such as acetone, acetylacetone and 2,4-heptadione.

The compound (II) capable of forming a compound having one silanol group in the molecular upon reacting with moisture, which is represented by the general formula (24), can be obtained, for example, by reacting the above-mentioned active hydrogen-containing compound or the like with a compound also referred to as "silylating agent" and having a (R²⁷)₃Si group (R²⁷ being as defined above) and a group (e.g. halogen) capable of reacting with an active hydrogen, for example trimethylsilyl chloride or dimethyl(tert-butyl)silyl chloride. The method of preparation is not limited to this, however.

Specific examples of the compound represented by the above general formula (24) include, but are not limited to, allyloxytrimethylsilane, N,O-bis(trimethylsilyl)acetamide, N-(trimethylsilyl)acetamide, bis(trimethylsilyl)trifluoroacetamide, N-methyl-N-trimethylsilyltrifluoroacetamide, bistrimethylsilylurea, N-(tert-butyldimethylsilyl)-N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyl trifluoromethanesulfonate, trimethylsilyl phenoxide, trimethylsilylation product derived from n-octanol, trimethylsilylation product derived from 2-ethylhexanol, tris(trimethylsilyl) derivative of glycerol, tris(trimethylsilyl) derivative of trimethylolpropane, tris(trimethylsilyl) derivative of pentaerythritol, tetra(trimethylsilyl) derivative of pentaerythritol, and the like. These may be used singly or two or more of them may be used in combination.

Further, compounds represented by the general formula (((R²⁹)₃SiO) (R³⁰O)ₛ)ₜZ, CH₃O (CH₂CH (CH₃) O)₅Si (CH₃)₃, CH₂=CHCH₂ (CH₂CH (CH₃) O) ₅Si (CH₃) ₃, (CH₃)₃SiO(CH₂CH(CH₃)O)₅Si (CH₃) ₃, (CH₃) ₃SiO (CH₂CH (CH₃) 0) ₇Si (CH₃) ₃
(in the formula, the three R²⁹ groups are the same or different and each is a substituted or unsubstituted univalent hydrocarbon group or a hydrogen atom, R³⁰ is a divalent hydrocarbon group containing 1 to 8 carbon atoms, s and t each is a positive integer, s is 1 to 6, s × t is not less than 5, and Z is a univalent to hexavalent organic group) can suitably be used as well. These may be used singly or two or more of them may be used in combination.

Among the compound (II) capable of forming a compound having one silanol group in the molecular upon reacting with moisture in view of lack of adverse effects on storage stability, weathering resistance and so on, those giving, after hydrolysis, phenols, acid amides or alcohols as the active hydrogen-containing compounds are preferred. More preferred are those giving phenols or alcohols, in which the active hydrogen-containing compound occurs as a hydroxyl group.

Among the compounds specifically mentioned above, N,O-bis(trimethylsilyl)acetamide, N-(trimethylsilyl)acetamide, trimethylsilyl phenoxide, trimethylsilylation product derived from n-octanol, trimethylsilylation product derived from 2-ethylhexanol, tris(trimethylsilyl) derivative of glycerol, tris(trimethylsilyl) derivative of trimethylolpropane, tris(trimethylsilyl) derivative of pentaerythritol, tetra(trimethylsilyl) derivative of pentaerythritol and the like are preferred.

The compound (II) capable of forming a compound having one silanol group in the molecular upon reacting with moisture forms such compound having one silanol group in the molecular by reacting with moisture during storage, in the stage of curing and/or after curing. Presumably, the thus-formed compound having one silanol group in the molecular reacts with a crosslinking silyl group of the vinyl polymer or a siloxane bond formed upon crosslinking and thus reduces the number of crosslinking points and provide the curing products with flexibility, as mentioned above.

The structure of the silanol group can be selected according to the species of Y and the number of a of the vinyl polymer of the invention, and curability and mechanical properties of the curing product of the invention can be controlled according to the purpose and application use.

The amount of addition of the silanol-containing compound can adequately be adjusted according to the expected physical properties of the curing products. The silanol-containing compound can be added in an amount of 0.1 to 50 parts by weight, preferably 0.3 to 20 parts by weight, more preferably 0.5 to 10 parts by weight, relative to 100 parts by weight of the vinyl polymer. When it is less than 0.1 part by weight, the effects of the addition will not be produced and, when it exceeds 50 parts by weight, insufficient crosslinking may result, hence the curing products will show excessively reduced strength and gel fraction characteristics.

The time for adding the silanol-containing compound to the vinyl polymer is not particularly restricted. The compound may be added in the step of vinyl polymer production or in the step of preparing the curable composition.

### <<Curable composition>>

The curable composition of the present invention may require a curing catalyst and/or a curing agent in some cases. Any of various compounding additives may be added thereto according to the physical properties required.

### <Curing catalyst, curing agent>

The crosslinking silyl group-containing polymer crosslinks and cures under siloxane bond formation in the presence or absence of various condensing catalysts known in the art. The properties of the curing products can widely range from rubber-like to resinous ones according to the molecular weight and main chain skeleton of the polymer.

As examples of such condensing catalyst, there may be mentioned, for example, tetravalent tin compounds such as dibutyltin dilaurate, dibutyltin diacetate, dibutyltin diethylhexanolate, dibutyltin dioctoate, dibutyltin bis(methyl maleate), dibutylthin bis(ethyl maleate), dibutyltin bis(butyl maleate), dibutyltin bis(isooctyl maleate), dibutyltin bis(tridecyl maleate), dibutyltin bis(benzyl maleate), dibutyltin maleate, dioctyltin diacetate, dioctyltin distearate, dioctyltin dilaurate, dioctyltin bis(ethyl maleate) and dioctyltin bis(isooctyl maleate); divalent tin compounds such as stannous octylate, stannous naphthenate and stannous stearate; monoalkyltins, for example monobutyltin compounds and monooctyltin compounds, such as monobutyltin trisoctoate and monobutyltin triisopropoxide; titanate esters such as tetrabutyl titanate and tetrapropyl titanate; organoaluminum compounds such as aluminum trisacetylacetonate, aluminum tris(ethyl acetoacetate) and diisopropoxyaluminum ethyl acetoacetate; chelate compounds such as zirconium tetraacetylacetonate and titanium tetraacetylacetonate; lead octylate; amine compounds such as butylamine, octylamine, laurylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidazole and 1,8-diazabicyclo[5.4.0]undecene-7 (DBU), or salts of these amine compounds with carboxylic acids; amine compound-organotin compound reaction products and mixtures, for example laurylamine-stannous octylate reaction products or mixtures; low-molecular-weight polyamide resins obtainable from a polyamine in excess amount and a polybasic acid; reaction products from a polyamine in excess amount and an epoxy compound; amino group-containing silane coupling agents such as γ-aminopropyltrimethoxysilane and N-(β-aminoethyl)aminopropylmethyldimethoxysilane; and like silanol condensing catalysts and, further, other known silanol condensing catalysts such as acidic catalysts and basic catalysts.

These catalysts may be used singly or two or more of them may be used in combination. The amount of addition of such condensing catalyst is preferably about 0.1 to 20 parts (by weight; hereinafter the same shall apply), more preferably 1 to 10 parts, relative to 100 parts of the vinyl polymer. When the amount of addition of the silanol condensing catalyst is below the above range, the curing rate may fall and the curing can hardly proceed to a satisfactory extent in some cases. Conversely, when the amount of addition of the silanol condensing catalyst exceeds the above range, local heat generation and/or foaming may occur in the step of curing, making it difficult to obtain good curing products; in addition, the pot life becomes excessively short and this is unfavorable from the workability viewpoint. The use of a tin curing catalyst is preferred for the purpose of controlling the curability, though not always necessary.

For further increasing the activity of the condensing catalyst in the curable composition of the present invention, a silanol group-free silicon compound represented by the general formula (37):

(R⁴⁹)ₐSi (OR⁵⁰)₄₋ₐ (37)

(in the formula, R⁴⁹ and R⁵⁰ each independently is a substituted or unsubstituted hydrocarbon group containing 1 to 20 carbon atoms and a is 0, 1, 2 or 3) may be added to the composition.

The above silicon compound is not particularly restricted but those compounds of the general formula (37) provided that R⁴⁹ is an aryl group containing 6 to 20 carbon atoms, such as phenyltrimethoxysilane, phenylmethyldimethoxysilane, phenyldimethylmethoxysilane, diphenyldimethoxysilane, diphenyldiethoxysilane and triphenylmethoxysilane, are preferred since their accelerating effect on the curing reaction of the composition is significant. In particular, diphenyldimethoxysilane and diphenyldiethoxysilane are inexpensive and easily available, hence are most preferred.

The amount of addition of this silicon compound is preferably about 0.01 to 20 parts, more preferably 0.1 to 10 parts, relative to 100 parts of the vinyl polymer. When the amount of addition is below this range, the curing reaction-accelerating effect may decrease in some cases. When, conversely, the amount of addition of the silicon compound exceeds this range, the hardness and/or tensile strength of the curing products may fall.

The species and amount of addition of the curable catalyst and/or curing agent can be selected according to the species of Y and the number of a of the vinyl polymer of the present invention, and curability and mechanical properties of the curing product of the present invention can be controlled according to the purpose and application use. In a case that Y is an alkoxy group, one provided with a smaller number of carbon atoms or bigger number of a has higher reactivity, thereby curing can be carried out with small amount of the curing catalyst and/or curing agent.

### <Adhesion providing agent>

In the composition of the invention, there may be incorporated a silane coupling agent and/or an adhesion providing agent other than the silane coupling agent. By adding such an adhesion providing agent, it becomes possible to further reduce the risk of the sealing material being peeled off from adherends, such as siding boards, when the joint width, for instance, is changed by an external force. Further, in some instances, it becomes no more necessary to use a primer, which is otherwise used for improving the adhesion, hence simplification of application works can be expected. As specific examples of the silane coupling agent, there may be mentioned isocyanato group-containing silanes such as γ-isocyanatopropyltrimethoxysilane, γ-isocyanatopropyltriethoxysilane, γ-isocyanatopropylmethyldiethoxysilane and γ-isocyanatopropylmethyldimethoxysilane; amino group-containing silanes such as γ-aminopropyltrimethoxysilane, γ-aminopropyltriethoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-ureidopropyltrimethoxysilane, N-phenyl-γ-aminopropyltrimethoxysilane, N-benzyl-γ-aminopropyltrimethoxysilane and N-vinylbenzyl-γ-aminopropyltriethoxysilane; mercapto group-containing silanes such as γ-mercaptopropyltrimethoxysilane, γ-mercaptopropyltriethoxysilane, γ-mercaptopropylmethyldimethoxysilane and γ-mercaptopropylmethyldiethoxysilane; epoxy group-containing silanes such as γ-glycidoxypropyltrimethoxysilane, γ-glycidoxypropyltriethoxysilane, γ-glycidoxypropylmethyldimethoxysilane, β-(3, 4-epoxycyclohexyl)ethyltrimethoxysilane and β-(3,4-epoxycyclohexyl)ethyltriethoxysilane; carboxy silanes such as β-carboxyethyltriethoxysilane, β-carboxyethylphenylbis(2-methoxyethoxy)silane and N-β-(carboxymethyl)aminoethyl-γ-aminopropyltrimethoxysilane; vinyl type unsaturated group-containing silanes such as vinyltrimethoxysilane, vinyltriethoxysilane, γ-methacryloyloxypropylmethyldimethoxysilane and γ-acroyloxypropylmethyltriethoxysilane; halogen-containing silanes such as γ-chloropropyltrimethoxysilane ; isocyanurate silanes such as tris(trimethoxysilyl) isocyanurate. Also usable as the silane coupling agent are modification derivatives of these, for example amino-modified silyl polymers, silylated amino polymers, unsaturated amino silane complexes, phenylamino-long chain alkylsilanes, aminosilylated silicones and silylated polyesters.

In the practice of the invention, the silane coupling agent is used generally in an amount within the range of 0.1 to 20 parts relative to 100 parts of the vinyl polymer. In particular, the use thereof within the range of 0.5 to 10 parts is preferred. As for the effect of the silane coupling agent added to the curable composition of the invention, it produces a marked adhesion improving effect under non-primer or primer-treated conditions when the composition is applied to various adherends, namely inorganic substrates such as glass, aluminum, stainless steel, zinc, copper and mortar, or organic substrates such as polyvinyl chloride, acrylics, polyesters, polyethylene, polypropylene and polycarbonates. When it is used under non-primer conditions, the improving effect on the adhesion to various adherends is particularly remarkable.

Specific examples of the agent other than the silane coupling agent include, but are not limited to, epoxy resins, phenol resins, sulfur, alkyl titanates and aromatic polyisocyanates, for example.

The adhesion providing agents specifically mentioned above may be used singly or two or more of them may be used in admixture. By adding these adhesion providing agents, it is possible to improve the adhesion to adherends. For improving the adhesion to the adherend metal surface such as the oil pan surface, in particular, the combined use of 0.1 to 20 parts by weight of a silane coupling agent selected from among the above adhesion providing agents is preferred, although not restricted.

The species and the amount of addition of the adhesion providing agent can be selected according to the species of Y and the number of a of the vinyl polymer of the invention, and curability and mechanical properties of the curing product of the invention can be controlled according to the purpose and application use. Especially, selection thereof needs to be done with care since these affect curability and elongation properties.

### <Plasticizer>

If necessary, any of various low-molecular-weight plasticizers may be used in the curable composition of the present invention to an extent such that the effect of the above-mentioned high-molecular-weight plasticizer is not impaired. Such plasticizer is not particularly restricted but, according to the purpose of addition, for example adjustment of physical properties or adjustment of other properties, use can be made of one or a mixture of two or more of phthalate esters such as dibutyl phthalate, diheptyl phthalate, di(2-ethylhexyl) phthalate and butyl benzyl phthalate; nonaromatic dibasic acid esters such as dioctyl adipate, dioctyl sebacate, dibutyl sebacate and isodecyl succinate; fatty acid esters such as butyl oleate and methyl acetylricinolate; polyalkylene glycol esters such as diethylene glycol dibenzoate, triethylene glycol dibenzoate and pentaerythritol esters; phosphate esters such as tricresyl phosphate and tributyl phosphate; trimellitate esters; hydrocarbon oils such as alkyldiphenyls and partially hydrogenated terphenyl; process oils; epoxy plasticizers such as epoxidized soybean oil and epoxidized benzyl stearate, although they are not always necessary. It is also possible to incorporate these plasticizers in the process of polymer production.

The amount of use of the plasticizer, when this is used, is not particularly restricted but generally is 5 to 150 parts by weight, preferably 10 to 120 parts by weight, more preferably 20 to 100 parts by weight, relative to 100 parts by weight of the vinyl polymer. If it is below 5 parts by weight, the effect as the plasticizer is no more produced and, if it is above 150 parts by weight, the mechanical strength of the curing products becomes insufficient.

### <Filler>

If necessary, any of various fillers may be used in the curable composition of the invention. The filler is not particularly restricted but includes reinforcing fillers such as wood flour, pulp, cotton chips, asbestos, glass fibers, carbon fibers, mica, walnut shell flour, rice hull flour, graphite, diatomaceous earth, clay, silica (fumed silica, precipitated silica, crystalline silica, fused silica, dolomite, silicic anhydride, hydrous silicic acid, etc.) and carbon black; fillers such as heavy calcium carbonate, colloidal calcium carbonate, magnesium carbonate, diatomaceous earth, calcined clay, clay, talc, titanium oxide, bentonite, organic bentonite, ferric oxide, finely comminuted aluminum, powdered flint, zinc oxide, activated zinc white, powdered zinc, zinc carbonate and shirasu balloons; and fibrous fillers such as asbestos, glass fibers or filaments, carbon fibers, Kevlar fibers and polyethylene fibers, and the like.

Preferred among these fillers are precipitated silica, fumed silica, crystalline silica, fused silica, dolomite, carbon black, calcium carbonate, titanium oxide, talc and the like.

In particular when high strength curing products are to be obtained using these fillers, a filler selected from among fumed silica, precipitated silica, silicic anhydride, hydrous silicic acid, carbon black, surface-treated fine calcium carbonate, crystalline silica, fused silica, calcined clay, clay and activated zinc white, etc. may be mainly added. Among these, ultrafine powder silica having specific surface area (determined by BET adsorbing method) of not less than 50 m²/g, generally 50 to 400 m²/g, preferably 100 to 300 m²/g, is preferred. More preferred silica is one in which the surface thereof is treated for hydrophobicity with an organic silicon compound such as organosilane, organosilazane and diorganocyclopolysiloxane.

As more specific examples of the silica filler excellent in reinforcing properties, there may be mentioned, but not particularly restricted, Aerogel (product of Japan Aerogel Co.), which is one species of fumed silica, and Nipsil (product of Nippon Silica Industrial, Co.), which is one species of precipitated silica.

When low-strength high-elongation curing products are desired, a filler selected from among titanium oxide, calcium carbonate, talc, ferric oxide, zinc oxide and shirasu balloons may mainly be added. Generally, when its specific surface area is small, calcium carbonate may not produce sufficient improving effects on the breaking strength, elongation at break, adhesion and weathering resistant adhesion of curing products. With the increasing specific surface area, its improving effects on the breaking strength, elongation at break, adhesion and weathering resistant adhesion of curing products increase.

Further, those species of calcium carbonate which have been surface-treated with a surface-treating agent are more preferred. When surface-treated calcium carbonate is used, the workability of the composition of the invention and the improving effects on the adhesion and weathering resistant adhesion of the curable composition are expected to be improved as compared with the use of non-surface-treated calcium carbonate. Used as the above surface-treating agent are organic materials or various surfactants, such as fatty acids, fatty acid soaps and fatty acid esters, and various coupling agents, such as silane coupling agents and titanate coupling agents. Specific examples include, but are not limited to, fatty acids such as caproic acid, caprylic acid, pelargonic acid, capric acid, undecanoic acid, lauric acid, myristic acid, palmitic acid, stearic acid, behenic acid and oleic acid, the sodium, potassium or like salts of such fatty acids, and alkyl esters of such fatty acids. Specific examples of the surfactants are sulfate ester type anionic surfactants such as polyoxyethylene alkyl ether sulfate esters and long-chain alcohol sulfate esters and the sodium, potassium or like salts thereof, and sulfonic acid type anionic surfactants such as alkylbenzenesulfonic acids, alkylnapthalenesulfonic acids, paraffinsulfonic acids, α-olefinsulfonic acids, alkylsulfosuccinic acids and the like and the sodium, potassium or like salts thereof. This surface-treating agent is used in the treatment preferably in an amount within the range of 0.1 to 20% by weight, more preferably within the range of 1 to 5% by weight, relative to calcium carbonate. When the amount used for the treatment is less than 0.1% by weight, the workability, adhesion and weathering resistant adhesion may not be improved to a sufficient extent. When it exceeds 20% by weight, the storage stability of the curable composition may decrease.

In the case that calcium carbonate is used, although not particularly obligatory, colloidal calcium carbonate is preferably used when the improving effects on thixotropy of the composition and the breaking strength, elongation at break, adhesion and weathering resistant adhesion of the curing products are particularly expected.

On the contrary, heavy calcium carbonate may sometimes be added in order to lower the viscosity or increase the amount of the composition or to reduce the cost. When heavy calcium carbonate is used, such species as described below can be used, if necessary

Heavy calcium carbonate is obtainable by grinding and processing naturally occurring chalk (whiting), marble or limestone, etc. As the method of grinding, there may be mentioned dry method and wet method. However, the product obtainable by wet grinding method is not preferable in many cases since it adversely affects the storage stability of the curable composition of the present invention. Heavy calcium carbonate is provided in the form of products having various average particle diameters as a result of the classification. When, but not particularly restricted, the improving effects on the breaking strength, elongation at break, adhesion and weathering resistant adhesion of the curing products are expected, the value of the specific surface area is preferably not less than 1.5 m²/g but not more than 50 m²/g, more preferably not less than 2 m²/g but not more than 50 m²/g, still more preferably not less than 2.4 m²/g but not more than 50 m²/g, particularly preferably not less than 3 m²/g but not more than 50 m²/g. When the specific surface area is less than 1.5 m²/g, the improving effect thereof may not be sufficient. Of course, this is not the case when the purpose is merely lowering the viscosity or increasing the amount.

The value of the specific surface area is the value determined by carrying out air permeation method (the method of determining the specific surface area from air permeability against the powder filled layer) according to JIS K5101 as a determination method. As the measurement equipment, specific surface area meter type SS-100 (product of Shimadzu Corporation) is preferably used.

These fillers may be used independently or two or more species may be used in combination, according to the purpose or need. Although not particularly restricted, when, for example, heavy calcium carbonate having the specific surface area of not less than 1.5 m²/g and colloidal calcium carbonate are used in combination, where necessary, increase in viscosity of the composition is moderately lowered and the improving effects on the breaking strength, elongation at break, adhesion and weathering resistant adhesion of the curing products are expected to a great extent.

When a filler is used, the amount of addition thereof is preferably within the range of 5 to 1,000 parts by weight, more preferably within the range of 20 to 500 parts by weight, most preferably within the range of 40 to 300 parts by weight, relative to 100 parts by weight of the vinyl polymer. When the amount of addition is below 5 parts by weight, the improving effects on the breaking strength, elongation at break, adhesion and weathering resistant adhesion may be insufficient and, when it exceeds 1,000 parts by weight, the workability of the curable composition may decrease in some instances. A single filler may be used alone or two or more fillers may be used in combination.

### <Ultrafine hollow particles>

Moreover, for the purpose of making the composition light or reducing the cost without causing dramatic decrease in physical properties, ultrafine hollow particles may further be used in combination with these reinforcing fillers.

As such ultrafine hollow particles (hereinafter referred as balloons), there may be mentioned, but not particularly restricted, hollow particles constituted of inorganic or organic materials having an diameter of not more than 1 mm, preferably not more than 500 µm, more preferably not more than 200 µm, as described in "Current Technology of Functional Fillers" (published by CMC Books). Particularly, the use of balloons having a true specific gravity of not more than 1.0 g/cm³, more preferably not more than 0.5 g/cm³, is preferred.

As examples of said inorganic balloons, there may be mentioned silicic acid balloons and non-silicic acid balloons. Silicic acid balloons specifically include, shirasu balloons, pearlite, glass balloons, silica balloons, fly-ash balloons, etc. and non-silicic acid balloons specifically include alumina balloons, zirconia balloons, carbon balloons, etc. As specific examples of such inorganic balloons, Winlite (product of Idichi Chemical) and Sankilite (product of Sanki Co.) as shirasu balloons, Calloon (product of Nippon Sheet Glass Co.), Selstar Z-28 (product of Sumitomo 3M), MICRO BALLOON (product of Emerson & Cuming Co.), CELAMIC GLASSMODULES (product of Pittsburge Corning) and GLASS BUBBLES (product of 3M) as glass balloons, Q-CEL (product of Asahi Glass CO.) and E-SPHERES (product of Taiheiyo Cement Co.) as silica balloons, CEROSPHERES (product of Pfamarketing) and FILLITE (product of Fillite U.S.A) as fly-ash balloons, BW (product of Showa Denko Co.) as alumina balloons, HOLLOW ZIRCONIUM SPHERES (product of Zircoa) as zirconia balloons, and Kurekasphere (product of Kureha Chemical Industry Co.) and Carbosphere (product of General Technologies) as carbon balloons, are commercially available.

As examples of said organic balloons, there can be mentioned thermosetting resin balloons and thermoplastic resin balloons. Thermosetting balloons specifically include phenol balloons, epoxy balloons and urea balloons, and thermoplastic balloons specifically include saran balloons, polystyrene balloons, polymethacrylate balloons, poly(vinyl alcohol) balloons and styrene-acrylic balloons. Crosslinked thermoplastic resin balloons can also be used. "Balloons" mentioned here may be foamed balloons or one comprising foaming agent and being foamed after compounding to thereby render the same as a balloon.

As specific examples of organic balloons, UCAR and PHENOLIC MICROBALLOONS (both being products of Union Carbide) as phenol balloons, ECCOSPHERES (product of Emerson & Cuming Co.) as urea balloons, SARAN MICROSPHERES (product of Dow Chemicals, Inc.), Expancel (product of Nihon Filament) and Matsumoto Microsphere (product of Matsumoto Yushi-Seiyaku Co.) as saran balloons, DYLITE EXPANDABLE POLYSTYRENE (product of Arco Polymers, Inc.) and EXPANDABLE POLYSTYRENE BEADS (product of BASF Wyandote) as polystyrene balloons and SX863(P) (product of Japan Synthetic Rubber Co.) as crosslinked styrene-acrylic balloons, are commercially available.

The above balloons may be used independently or two or more species may be used in admixture. Furthermore, surface of these balloons may be treated with fatty acid, fatty acid ester, rosin, rhodinic acid lignin, silane coupling agent, titanium coupling agent, aluiminum coupling agent or polypropylene glycol to improve dispersibility and workability of the composition and used. These balloons are used for the purpose of making the curing products light and reducing the cost without deteriorating flexibility, elongation and strength properties of the curing products obtainable by curing the composition.

The content of balloons is not particularly restricted, but preferably in the range of 0.1 to 50 parts, more preferably 0.1 to 30 parts, relative to 100 parts by weight of the vinyl polymer. If the content is less than 0.1 part, effects for making the product light is small and if it exceeds 50 parts, tensile strength may be found to be decreased among mechanical properties of the curing products obtainable by curing the composition. When the specific gravity of the balloon is not less than 0.1, the content is preferably 3 to 50 parts, more preferably 5 to 30 parts.

### <Physical property modifier>

One or more physical property modifiers may be added to the curable composition of the present invention according to need for adjusting the tensile characteristics of the resulting curing products.

The physical property modifier is not particularly restricted but includes, for example, alkylalkoxysilanes such as methyltrimethoxysilane, dimethyldimethoxysilane, trimethylmethoxysilane and n-propyltrimethoxysilane; functional group-containing alkoxysilanes, for example alkylisopropenoxysilanes such as dimethyldiisopropenoxysilane, methyltriisopropenoxysilane and γ-glycidoxypropylmethyldiisopropenoxysilane, γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane and γ-mercaptopropylmethyldimethoxysilane; silicone varnishes; and polysiloxanes. By using said physical property modifier, it becomes possible to increase or decrease the hardness and/or attain elongation properties as obtainable upon curing of the composition of the invention. The physical property modifies such as mentioned above may be used singly or two or more of them may be used in combination.

### <Thixotropy providing agent (antisagging agent)>

A thixotropy providing agent (antisagging agent) may be added to the curable composition of the invention according to need for sagging prevention and workability improvement.

The antisagging agent is not particularly restricted but includes, for example, polyamide waxes, hydrogenated castor oil derivatives; and metal soaps such as calcium stearate, aluminum stearate and barium stearate. These thixotropy providing agents (antisagging agents) may be used singly or two or more of them may be used in combination.

### <Antioxidant>

Where necessary, an antioxidant may be added to the curable composition of the present invention. Various antioxidants are known and there may be mentioned, but not limited to, various ones described in "Antioxidants Handbook" (published by Taiseisya) and "Degradation and Stabilization of Polymeric Materials" (published by CMC Books, pp235-242).

For example, there may be mentioned thioether antioxidants such as MARK PEP-36 and MARK AO-23 (both being products of Adeka Argus Chemical Co.) and phosphorous antioxidants such as Irgafos 38, Irgafos 168 and Irgafos P-EPQ (all being products of Japan Ciba Geigy), and among these, hindered phenol compounds as described below are preferred.

As hindered phenol compounds, there may specifically mentioned: 2,6-di-tert-butyl-4-methylphenol, 2,6-di-tert-butyl-4-ethylphenol, mono-, di-, and tri-(α-methylbenzyl)phenol, 2,2'-methylenebis(4-ethyl-6-tertbutylphenol), 2,2'-methylenebis(4-methyl-6-tertbutylphenol), 4,4'-butylidenebis(3-methl-6-tertbutylphenol), 4,4'-thiobis(3-methyl-6-tert-butylphenol), 2,5-di-tert-butylhydroquinone, 2,5-di-tert-amylhydroquinone, triethyleneglycol-bis-[3-(3-tert-butyl-5-methyl-4-hydroxyphenyl)propionate], 1,6-hexanediol-bis[3-(3,5-di-tert-butyl-4-hydroxyphenyl)propionate], 2,4-bis-(n-octylthio)-6-(4-hydroxy-3,5-di-tert-butylanilino)-1,3,5-triazine, pentaerythrityl-tetrakis[3-(3,5-di-tert-butyl-4-hydroxyphenyl)propionate], 2,2-thio-diethylenebis[3-(3,5-di-tert-butyl-4-hydroxyphenyl)propionate], octadecyl-3-(3,5-di-tert-butyl-4-hydroxyphenyl)propionate, N,N'-hexamethylenebis(3,5-di-tert-butyl-4-hydroxyhydrocinnamide), 3,5-di-tert-butyl-4-hydroxy-benzylphosphonate-diethyl ester, 1,3,5-trimethyl-2,4,6-tris(3,5-di-tert-butyl-4-hydroxybenzyl)benzene, calcium bis(3,5-di-tert-butyl-4-hydroxybenzylethyl phosphonate), tris-(3,5-di-tert-butyl-4-hydroxybenzyl) isocyanulate, 2,4-bis[(octylthio)methyl] o-cresol, N,N'-bis[3-(3,5-di-tert-butyl-4-hydroxyphenyl)propionyl]hydrazine, tris(2,4-di-tert-butylphenyl)phosphite, 2-(5-methyl-2-hydroxyphenyl)benzotriazol, 2-[2-hydroxy-3,5-bis(α,α-dimethylbenzyl)phenyl]-2H-benzotriazol, 2-(3,5-di-tert-butyl-2-hydroxyphenyl)benzotriazol, 2-(3-tert-butyl-5-methyl-2-hydroxyphenyl)-5-chloroobenzotriazol, 2-(3,5-di-tert-butyl-2-hydroxyphenyl)-5-chlorobenzotriazol, 2-(3,5-di-tert-amyl-2-hydroxyphenyl)benzotriazol, 2-(2'-hydroxy-5'-tert-octylphenyl)-benzotriazol, methyl-3-[3-tert-butyl-5-(2H-benzotriazol-2-yl)-4-hydroxyphenyl]propionate-polyethylene glycol (M.W.= c.a. 300) condensates, hydroxyphenyl benzotriazol derivatives, bis(1,2,2,6,6-pentamethyl-4-piperidyl) 2-(3,5-di-tert-butyl-4-hydroxybenzyl)-2-n-butylmalonic acid, 2,4-di-tert-butylphenyl-3,5-di-tert-butyl-4-hydroxybonzoate, and the like.

As specific examples in trade names, there may be mentioned, but not particularly restricted, NOCRAC 200, NOCRAC M-17, NOCRAC SP, NOCRAC SP-N, NOCRAC NS-5, NOCRAC NS-6, NOCRAC NS-30, NOCRAC 300, NOCRAC NS-7, NOCRAC DAH (all being produts of Ouchishinko Chemical Industrial Co.), MARK AO-30, MARK AO-40, MARK AO-50, MARK AO-60, MARK AO-616, MARK AO-635, MARK AO-658, MARK AO-80, MARK AO-15, MARK AO-18, MARK 328, MARK AO-37 (all being products of Adeka Argus Chemical Co.), IRGANOX-245, IRGANOX-259, IRGANOX-565, IRGANOX-1010, IRGANOX-1024, IRGANOX-1035, IRGANOX-1076, IRGANOX-1081, IRGANOX-1098, IRGANOX-1222, IRGANOX-1330, IRGANOX-1425WL (all being products of Japan Ciba Geigy), Sumilizer GM, Sumilizer GA-80 (both being products of Sumitomo Chemical Co.), and the like.

Antioxidants may be used in combination with light stabilizers mentioned herein later. When these are used in combination, effects thereof are further manifested and heat resistance may sometimes be improved, hence it is particularly preferable. TINUVIN C353, TINUVIN B75 (both being products of Japan Ciba Geigy) or the like, in which an antioxidant and light stabilizer are mixed in advance, may be used.

The amount of use of the antioxidants is preferably in the range of 0.1 to 10 parts by weight relative to 100 parts by weight of the vinyl polymer. If it is less than 0.1 part by weight, the improving effect on weathering resistance is small and if it exceeds 5 parts by weight, effect is not proportional to the amount used, hence it is not economically advantageous.

### <Light stabilizer>

Where necessary, a light stabilizer may be added to the curable composition of the present invention. Various light stabilizers are known and there may be mentioned, but not limited to, various ones described in "Antioxidants Handbook" (published by Taiseisya) and "Degradation and Stabilization of Polymeric Materials" (published by CMC Books, pp235-242).

Among light stabilizers, ultraviolet absorbers are preferred, but not particularly limited, and there may be specifically mentioned benzotriazol compounds such as TINUVIN P, TINUVIN 234, TINUVIN 320, TINUVIN 326, TINUVIN 327, TINUVIN 329, TINUVIN 213 (all being products of Japan Ciba Geigy), triazine compounds such as TINUVIN 1577, benzophenone compounds such as CHIMASSORB 81, benzoate compounds such as TINWIN 120 (product of Japan Ciba Geigy), and the like. Hindered amine compounds are also preferred and such compounds are described below.

Succinic acid-dimethyl-1-(2-hydroxyethyl)-4-hydroxy-2,2,6,6-tetramethyl piperidine polycondensates, poly[{6-(1,1,3,3-tetramethylbutyl)amino-1,3,5-triazine-2,4-diyl}{(2,2,6,6-tetramethyl-4-piperidyl)imino}], N,N'-bis(3-aminopropyl)ethylenediamine-2,4-bis[N-butyl-N-(1,2,2,6,6-pentamethyl-4-piperidyl)amino]-6-chloro-1,3,5-triazine condensates, bis(2,2,6,6-tetramethyl-4-piperidyl)sebacate, succinic acid-bis(2,2,6,6-tetramethyl-4-piperidinyl) esters, and the like may be mentioned.

As specific examples in trade names, there may be mentioned, but not particularly restricted, TINUVIN 622LD, TINUVIN 144, CHIMASSORB 944LD, CHIMASSORB 119FL, Irganofos 168 (all being products of Japan Ciba Geigy), MARK LA-52, MARK LA-57, MARK LA-62, MARK LA-67, MARK LA-63, MARK LA-68, MARK LA-82, MARK LA-87 (all being products of Adeka Argus Chemical Co.), Sanol LS-770, Sanol LS-765, Sanol LS-292, Sanol LS-2626, Sanol LS-1114, Sanol LS-744, Sanol LS-440 (all being products of Sankyo Co.), and the like.

Further, ultraviolet absorbers and hindered amine compounds may be used in combination, but it is not particularly obligatory, since the combined used may sometimes increase effects. Therefore, the combined use thereof may sometimes be preferred.

Light stabilizers and antioxidants mentioned above may be used in combination. When these are used in combination, effects thereof are further manifested and weathering resistance may sometimes be improved, hence it is particularly preferred. TINUVIN C353, TINUVIN B75 (both being products of Japan Ciba Geigy) or the like, in which an antioxidant and light stabilizer are mixed in advance, may be used.

The amount of use of the light stabilizer is preferably within the range of 0.1 to 10 parts by weight relative to 100 parts by weight of the vinyl polymer. If it is less than 0.1 part by weight, the improving effect of weathering resistance may be small and if it exceeds 5 parts by weight, effect is not proportional to the amount used, hence it is not economically advantageous.

### Other additives

Where necessary, various additive(s) may be added to the curable composition of the invention for the purpose of adjusting various physical properties of the curable composition and/or curing products. As examples of such additives, there may be mentioned, for example, flame retardants, curability adjusting agents, radical inhibitors, metal deactivators, antiozonants, phosphorus-containing peroxide decomposers, lubricants, pigments, foaming agents, and photocurable resins. These various additives may be used singly or two or more species may be used in combination.

Specific examples of these additives are described, for example, in Japanese Kokoku Publication Hei-04-69659, Japanese Kokoku Publication Hei-07-108928, Japanese Kokai Publication Sho-63-254149 and Japanese Kokai Publication Sho-64-22904.

The curable composition of the present invention may be prepared as a one-component formulation by compounding all the ingredients in advance and storing the compound in a tightly closed container, which compound undergoes curing by atmospheric moisture when applied, or as a two-component formulation by separately compounding a curing catalyst, filler, plasticizer, water and other ingredients as a curing agent in advance and, said compound is admixed with the polymer composition prior to use. In the case of such two-component formulation, a colorant can be added in the step of mixing the two components and thus it becomes possible to prepare a variety of colors with limited color stocks in providing sealing materials matched in color to the color of siding boards, for instance. Thus, two-component formulations make it easy to cope with the market demand for multicolor systems, hence are more preferred for use in low-rise buildings. The colorant facilitates the application work when prepared, for example in the form of a paste by blending a pigment and plasticizer, optionally together with a filler. Further, by adding a retarder in blending the two components, it is possible to exactly adjust the curing rate at the site of application.

### <<Curing products>>

### <Uses>

The curing composition of the present invention can be used in various fields of application which include, but are not limited to, sealing materials, for example elastic sealing materials for buildings and sealing materials for double glazing, electric and electronic part materials such as solar cell reverse side sealing materials, electric insulating materials such as insulating covering materials for electric wires and cables, pressure sensitive adhesives, adhesives, elastic adhesives, coatings, powder coatings, coating materials, foamed bodies, potting agents for electric and electronic use, films, gaskets, casting materials, various molding materials, and rustproof/waterproof sealants for end faces (cut sections) of wire glass or double glazing, and liquid sealants used in automotive parts, electric machinery parts and various other machinery parts.

### EXAMPLES

In the following, specific examples according to the present invention and comparative examples are given to illustrate the invention. The following examples are, however, by no means limitative of the scope of the present invention.

In the following examples and comparative examples, "part(s)" and "%" respectively mean "part(s) by weight" and "% by weight". In the examples, the term "triamine" means pentamethyldiethylenetriamine.

In the following examples, the "number average molecular weight" and "molecular weight distribution (ratio of weight average molecular weight to number average molecular weight)" were calculated by the standard polystyrene equivalent method using gel permeation chromatography (GPC). The GPC column used was one packed with crosslinked polystyrene gel (Shodex GPC K-804; product of Showa Denko) and the GPC solvent used was chloroform.

### (Production Example 1)

### (Synthesis of an alkenyl group-containing carboxylic acid salt)

10-Undecenic acid (150 g, 0.814 mol) and potassium tert-butoxide (91.3 g, 0.814 mol) were added to methanol (250 mL), and the mixture was stirred at 0°C. The volatile matter was distilled off by heating under reduced pressure, whereby potassium undecenoate represented by the following formula was obtained: CH₂=CH-(CH₂)₈-CO₂⁻⁺K

### (BA semibatchwise polymerization - 1 kg)

In a nitrogen atmosphere, a 2-liter glass reaction vessel was charged with cuprous bromide (8.39 g, 0.0585 mol) and acetonitrile (112 mL) and the contents were heated at 70°C for 60 minutes. Thereto were added butyl acrylate (224 mL, 1.56 mol) and diethyl 2,5-dibromoadipate (17.6 g, 0.0488 mol), and the mixture was further stirred for 30 minutes. Thereto was added triamine (0.41 mL, 1.95 mmol) to thereby initiate the polymerization. Thereafter, while the reaction was followed by sampling the reaction mixture, triamine (5.66 mL, 27.1 mmol) was added and, 55 minutes after reaction initiation and thereon, butyl acrylate (895 mL, 6.24 mol) was added over 140 minutes. After completion of the addition of butyl acrylate, heating was further continued for 170 minutes. At this time, the consumption of butyl acrylate as determined by GC was 92.9%. The mixture was diluted with toluene and then treated with activated alumina, and the volatile matter was distilled off by heating under reduced pressure to give a colorless transparent polymer [1]. The polymer [1] obtained had a number average molecular weight of 21,000 with a molecular weight distribution of 1.1.

The above polymer [1] (0.35 kg), the above-mentioned potassium undecenoate (8.85 g) and dimethylacetamide (350 mL) were placed in a glass vessel, and the mixture was heated at 70°C with stirring in a nitrogen atmosphere for 3 hours. The volatile matter was removed from the reaction mixture by heating under reduced pressure, the residue was diluted with toluene and the dilution was filtered. The filtrate was concentrated by removing the volatile matter therefrom by heating under reduced pressure. To this was added aluminum silicate (Kyowaad 700PEL; product of Kyowa Chemical) in an amount of 20% by weight relative to the polymer, and the mixture was heated at 100°C with stirring for 3 hours. The reaction mixture was diluted with toluene, the dilution was filtered, and the volatile matter was distilled off from the filtrate by heating under reduced pressure to give an alkenyl group-terminated polymer (polymer [2]). ¹H-NMR spectrometry revealed the introduction of 1.9 alkenyl groups per polymer molecule.

A 1-liter pressure reaction vessel was charged with the polymer [2] (350 g), trimethoxysilane (15.0 mL), methyl orthoformate (3.6 mL) and platinum(0)-1,1,3,3-tetramethyl-1,3-divinyldisiloxane complex. The amount of the platinum catalyst used was such that the mole ratio thereof to the alkenyl group in the polymer amounted to 5 × 10⁻⁴ equivalents. The reaction was allowed to proceed by heating the reaction mixture. The volatile matter was then distilled off from the mixture under reduced pressure, whereby a silyl group-terminated vinyl polymer (polymer [P1]) was obtained. The polymer obtained had a number average molecular weight of 26,000 with a molecular weight distribution of 1.2. The average number of the silyl groups introduced per polymer molecule as determined by ¹H-NMR spectrometry was 1.4.

Similarly, a 1-liter pressure reaction vessel was charged with the polymer [2], trimethoxysilane, methyl orthoformate and platinum(0)-1,1,3,3-tetramethyl-1,3-divinyldisiloxane complex, the reaction was allowed to proceed by sufficient heating, and the volatile matter was then distilled off from the mixture under reduced pressure, whereby a silyl group-terminated vinyl polymer (polymer [P2]) was obtained. The polymer obtained had a number average molecular weight of 26,000 with a molecular weight distribution of 1.2. The average number of the silyl groups introduced per polymer molecule as determined by ¹H-NMR spectrometry was 2.0.

Similarly, a 1-liter pressure reaction vessel was charged with the polymer [2], dimethoxymethylhydrosilane, methyl orthoformate and platinum(0)-1,1,3,3-tetramethyl-1,3-divinyldisiloxane complex, the reaction was allowed to sufficiently proceed by heating, and the volatile matter was then distilled off from the mixture under reduced pressure to give a silyl group-terminated vinyl polymer (polymer [P3]). The polymer obtained had a number average molecular weight of 26,000 with a molecular weight distribution of 1.2. The average number of the silyl groups introduced per polymer molecule as determined by ¹H-NMR spectrometry was 1.4.

### (Production Example 2)

A 2-liter separable flask equipped with a reflux condenser and a stirrer was charged with CuBr (8.39 g, 0.0585 mol), and the reaction vessel inside was purged with nitrogen. Acetonitrile (112 mL) was added, and the contents were stirred on an oil bath at 70°C for 30 minutes. Thereto were added butyl acrylate (224 mL), diethyl 2,5-dibromoadipate (23.4 g, 0.0650 mol) and triamine (0.500 mL, 2.44 mmol), and the reaction was thereby started. While heating at 70°C with stirring, butyl acrylate (895 mL) was added dropwise continuously over 150 minutes. During the dropping of butyl acrylate, triamine (2.50 mL, 12.0 mmol) was added. After the lapse of 310 minutes after reaction initiation, 1,7-octadiene (288 mL, 1.95 mol) and triamine (4.0 mL, 0.0195 mol) were added, and the heating at 70°C with stirring was continued for 240 minutes.

The reaction mixture was diluted with hexane and passed through an activated alumina column, and the volatile matter was then distilled off under reduced pressure to give an alkenyl group-terminated polymer (polymer [3]). The polymer [3] had a number average molecular weight of 20,000 with a molecular weight distribution of 1.3.

A 2-liter separable flask equipped with a reflux condenser was charged with the polymer [3] (1.0 kg), potassium benzoate (34.8 g) and N,N-dimethylacetamide (1 L), and the mixture was heated at 70°C with stirring under a nitrogen stream for 15 hours. The N,N-dimethylacetamide was removed by heating under reduced pressure, and the residue was diluted with toluene. The toluene-insoluble matter (KBr and excess potassium benzoate) was filtered off using an activated alumina column. The volatile matter was distilled off from the filtrate under reduced pressure to give a polymer [4].

A 2-liter round-bottom flask equipped with a reflux condenser was charged with the polymer [4] (1 kg), aluminum silicate (200 g, Kyowaad 700PEL, product of Kyowa Chemical) and toluene (1 L), and the mixture was heated at 100°C under a nitrogen stream for 5.5 hours. The aluminum silicate was filtered off, and the toluene was distilled off from the filtrate under reduced pressure to give a polymer [5].

A 1-liter pressure reaction vessel was charged with the polymer [5] (720 g), trimethoxysilane (31.7 mL), methyl orthoformate (8.1 mL) and platinum(0)-1,1,3,3-tetramethyl-1,3-divinyldisiloxane complex. The amount of the platinum catalyst used was such that the mole ratio thereof to the alkenyl group in the polymer amounted to 5 × 10⁻⁴ equivalents. The reaction was allowed to proceed by heating the reaction mixture. The volatile matter was then distilled off from the mixture under reduced pressure, whereby a silyl group-terminated vinyl polymer (polymer [P4]) was obtained. The polymer obtained had a number average molecular weight of 23,000 as determined by GPC (polystyrene equivalent basis) with a molecular weight distribution of 1.4. The average number of the silyl groups introduced per polymer molecule as determined by ¹H-NMR spectrometry was 1.7.

Similarly, a 1-liter pressure reaction vessel was charged with the polymer [5], trimethoxysilane, dimethoxymethylhydrosilane, methyl orthoformate and platinum(0)-1,1,3,3-tetramethyl-1,3-divinyldisiloxane complex. The charging ratio between trimethxoysilane and dimethoxymethylhydrosilane was 70:30. The reaction was allowed to proceed by heating the reaction mixture, and the volatile matter was then distilled off from the mixture under reduced pressure, whereby a silyl group-terminated vinyl polymer (polymer [P5]) was obtained. The polymer obtained had a number average molecular weight of 23,000 as determined by GPC (polystyrene equivalent basis) with a molecular weight distribution of 1.4. The average number of the silyl groups introduced per polymer molecule was determined by ¹H-NMR spectrometry and it was found that 1.2 trimethoxysilyl groups and 0.5 dimethoxymethylsilyl group had been introduced per molecule.

Similarly, a 1-liter pressure reaction vessel was charged with the polymer [5], dimethoxymethylhydrosilane, methyl orthoformate and platinum(0)-1,1,3,3-tetramethyl-1,3-divinyldisiloxane complex, the reaction was allowed to proceed by heating, and the volatile matter was then distilled off from the mixture under reduced pressure to give a silyl group-terminated vinyl polymer (polymer [P6]). The polymer obtained had a number average molecular weight of 23,000 as determined by GPC (polystyrene equivalent basis) with a molecular weight distribution of 1.4. The average number of the silyl groups introduced per polymer molecule as determined by ¹H-NMR spectrometry was 1.7.

### (Production Example 3)

A 50-liter polymerizer equipped with a reflux column and a stirrer was charged with CuBr (251.82 g, 1.76 mol), and the reaction vessel inside was purged with nitrogen. Acetonitrile (3,360 mL) was added, and the contents were stirred at 68°C for 20 minutes. Thereto were added butyl acrylate (6.80 L), diethyl 2,5-dibromoadipate (526.70 g, 1.46 mol) and triamine (12.0 mL, 0.0585 mol), and the reaction was thereby started. While heating at 70°C with stirring, butyl acrylate (26.80 L) was added dropwise continuously over 204 minutes. During the dropping of butyl acrylate, triamine (36.0 mL, 0.176 mol) was added. After the lapse of 397 minutes after reaction initiation, 1,7-octadiene (8,640 mL, 58.5 mol) and triamine (120 mL, 0.585 mol) were added, and heating at 80°C with stirring was continued for 240 minutes. Then, triamine (80 mL, 0.390 mol) was added, and the mixture was heated at 90°C with stirring for 240 minutes.

The reaction mixture was diluted with toluene and, after removing the insoluble copper complex using a separation plate type centrifugal settler, passed through an activated alumina column, and the volatile matter was then distilled off under reduced pressure to give an alkenyl group-terminated polymer (polymer [6]). The polymer [6] had a number average molecular weight of 24,000 with a molecular weight distribution of 1.21.

A 10-liter separable flask equipped with a reflux condenser was charged with the polymer [6] (3.0 kg), potassium acetate (24.5 g) and N,N-dimethylacetamide (3 L), and the mixture was heated at 100°C with stirring under a nitrogen stream for 10 hours. The N,N-dimethylacetamide was removed by heating under reduced pressure, and the residue was diluted with toluene. The toluene-insoluble matter (KBr and excess potassium acetate) was filtered off using an activated alumina column. The volatile matter was distilled off from the filtrate under reduced pressure to give a polymer [7].

A 10-liter round-bottom flask equipped with a reflux condenser was charged with the polymer [7] (3 kg), hydrotalcite (total 450 g, Kyowaad 500SH 200 g and Kyowaad 700SL 250 g, products of Kyowa Chemical) and xylene (0.6 L), and the mixture was heated at 130°C under a nitrogen stream for 5.0 hours with stirring. The aluminum silicate was filtered off, and the volatile matter was distilled off from the filtrate under reduced pressure to give a polymer [8].

A 2-liter reaction vessel was charged with the polymer [8] (1,000 g), trimethoxysilane (52 mL), methyl orthoformate (13.3 mL) and platinum(0)-1,1,3,3-tetramethyl-1,3-divinyldisiloxane complex. The platinum catalyst and trimethoxysilane were further added during reaction. The total amount of the trimethoxysilane used was 69 mL and the total amount of the platinum catalyst amounted to 1 × 10⁻³ equivalent as expressed in mole ratio to the alkenyl group in the polymer. The reaction was allowed to proceed by heating the reaction mixture. The volatile matter was then distilled off from the mixture under reduced pressure, whereby a silyl group-terminated vinyl polymer (polymer [P7]) was obtained. The polymer obtained had a number average molecular weight of 28,500 as determined by GPC (polystyrene equivalent basis) with a molecular weight distribution of 1.4. The average number of the silyl groups introduced per polymer molecule as determined by ¹H-NMR spectrometry was 2.5.

Similarly, a 2-liter reaction vessel was charged with the polymer [8], 3-mercaptopropyltrimethoxysilane and 2,2'-azobis-2-methylbutyronitrile. The reaction was allowed to proceed by heating, and the volatile matter was then distilled off from the mixture under reduced pressure to a sufficient extent (so that no unreacted 3-mercaptopropyltrimethoxysilane might remain), whereby a silyl group-terminated vinyl polymer (polymer [P8]) was obtained. The polymer obtained had a number average molecular weight of 28,500 as determined by GPC (polystyrene equivalent basis) with a molecular weight distribution of 1.4. The average number of the silyl groups introduced per polymer molecule as determined by ¹H-NMR spectrometry was 2.8.

Similarly, a 2-liter reaction vessel was charged with the polymer [8] (1,000 g), dimethoxymethylhydrosilane (45 mL), methyl orthoformate (13.3 mL) and platinum(0)-1,1,3,3-tetramethyl-1,3-divinyldisiloxane. Like in the case of polymer [P7], the platinum catalyst and dimethoxymethylsilane were added during reaction. The reaction was allowed to sufficiently proceed by heating, and the volatile matter was then distilled off from the mixture under reduced pressure to give a silyl group-terminated vinyl polymer (polymer [P9]). The polymer obtained had a number average molecular weight of 28,500 with a molecular weight distribution of 1.4. The average number of the silyl groups introduced per polymer molecule as determined by ¹H-NMR spectrometry was 2.5.

### (Production Example 4)

Based on the method described in Example 2 of Japanese Kokai Publication Hei-11-080249, n-butyl acrylate was polymerized using hydroxyethyl 2-bromopropionate as the initiator and a combination of cuprous bromide and 2,2'-bipyridyl as the polymerization catalyst, followed by addition of 2-hydroxyethyl methacrylate at the final stage of polymerization, whereby hydroxyl group-terminated poly(n-butyl acrylate) (polymer [9]) was obtained. The polymer obtained had a number average molecular weight of 6,100 as determined by GPC (polystyrene equivalent basis) with a molecular weight distribution of 1.3. The average number of the silyl groups introduced per polymer molecule as determined by ¹H-NMR spectrometry was 3.3.

To this was added isocyanatopropyltrimethoxysilane and the urethane formation reaction was carried out, and the terminal hydroxyl groups were converted to trimethoxysilyl groups to give a vinyl polymer (polymer [P10]) having, on average, 3.3 trimethoxysilyl groups per molecule.

### (Production Example 5)

A 2-liter separable flask equipped with a reflux condenser and a stirrer was charged with CuBr (22.4 g, 0.156 mol), and the reaction vessel inside was purged with nitrogen. Acetonitrile (112 mL) was added, and the contents were stirred on an oil bath at 70°C for 30 minutes. Thereto were added butyl acrylate (0.20 kg), methyl 2-bromopropionate (86.9 g, 0.520 mol) and triamine (0.19 mL, 0.18 g, 1.04 mmol), and the reaction was thereby started. While heating at 70°C with stirring, butyl acrylate (0.80 kg) was added dropwise continuously over 150 minutes. During the dropping of butyl acrylate, triamine (1.81 mL, 1.71 g, 9.88 mmol) was added, and heating was continued at 70°C for 230 minutes.

The reaction mixture was diluted with toluene and passed through an activated alumina column, and the volatile matter was then distilled off under reduced pressure to give an alkenyl group-terminated polymer (polymer [10]). The polymer [10] had a number average molecular weight of 2,600 with a molecular weight distribution of 1.18.

A 2-liter separable flask equipped with a reflux condenser was charged with the polymer [10] (0.937 kg), potassium acetate (73.5 g) and N,N-dimethylacetamide (0.8 L), and the mixture was heated at 70°C with stirring under a nitrogen stream for 5 hours. The N,N-dimethylacetamide was removed by heating under reduced pressure, and the residue was diluted with toluene. The toluene-insoluble matter (KBr and excess potassium acetate) was filtered off using an activated alumina column. The volatile matter was distilled off from the filtrate under reduced pressure to give a polymer [P11].

### (Examples 1 to 11)

The polymers [P1] to [P10] (except for [P3], [P6] and [P9]) obtained in Production Examples 1 to 4 were each cured at room temperature using a tetravalent tin catalyst (dibutyltin diacetylacetonate) or a divalent tin catalyst (stannous octylate) together with a curing promoter (laurylamine), and evaluated for skinning time. In the present invention, the skinning time was evaluated in terms of time until the composition manifested rubber elasticity and no more adhered to a metal spatula. The compounding formulations and evaluation results are shown in Table 1.

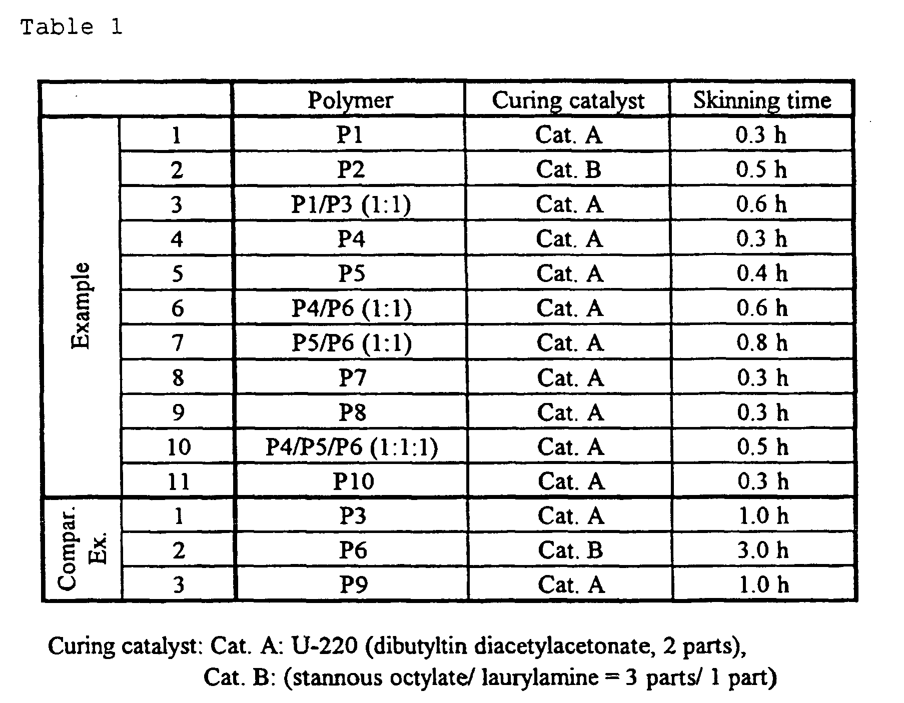

### (Examples 12 to 23)

A 100-part portion of each of the polymers [P1] to [P10] (except for [P3], [P6] and [P9]) obtained in Production Examples 1 to 4 was blended with 120 parts of colloidal calcium carbonate (Hakuenka CCR; product of Shiraishi Kogyo), 30 parts of heavy calcium carbonate (Nanox 25A; product of Maruo Calcium), 50 parts of a plasticizer, 4 parts of an air oxidation-curable substance, 3 parts of a photocurable substance and 2 parts of a silanol-containing compound and, after thorough mixing using a three-roll paint mill, the composition was cured using a curing catalyst in the same manner as in Example 1. After skinning time evaluation on that occasion, each composition was cured and matured at room temperature for 2 days and then at 50°C for 3 days to give a curing product. Each curing product was evaluated for residual tackiness. The curing product was further irradiated with light in a xenon weather meter (Suga Shikenki model SX120, radiant intensity 180 W, black panel temperature 63°C, 18 minutes of rainfall per 2 hours of irradiation) for 5,000 hours and then evaluated for curing product surface condition by visual observation. Another curing product sample prepared in the same manner was allowed to stand outdoors at a site in Torikai Nishi, Settsu City, Osaka Prefecture, Japan, for 2 months and then evaluated for curing product surface condition by visual observation. The compounding formulations and the evaluation results are shown in Table 2.

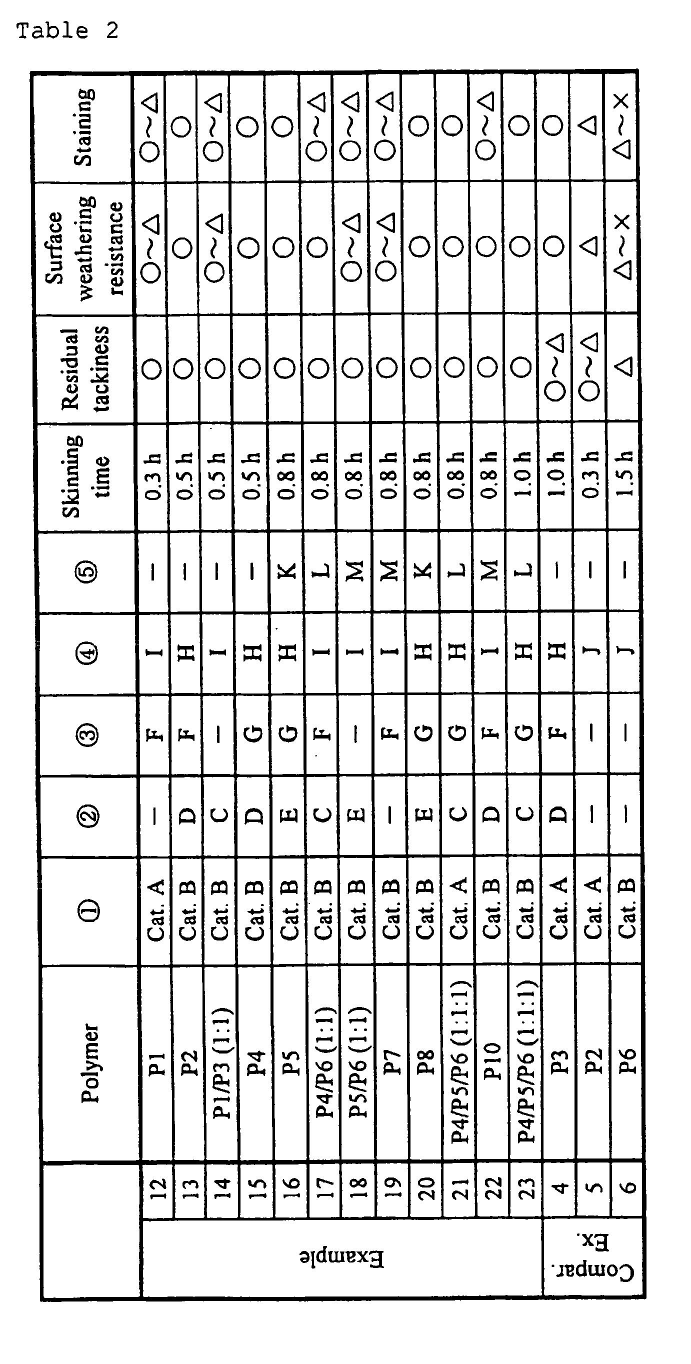

### (Explanation of headings in Table 2)

Residual tackiness: Good ← ○ > Δ > × → poor (sticky)
Surface weathering resistance: Good ← ○ > Δ > × → poor (cracking and/or blushing/whitening)
Staining: Good ← ○ > Δ > × → blackening (large quantity of adhering matter)
① Curing catalyst: Cat. A - U-220 (dibutyltin acetylacetonate, 2 parts), Cat. B - (stannous octylate/laurylamine = 3 parts/1 part)
② Air oxidation-curable substance: C - tung oil, D - linseed oil, E - 1,2-polybutadiene
③ Photocurable substance: F - pentaerythritol triacrylate, G - trimethylolpropane triacrylate
④ Plasticizer: H - P11, I - PN-260 (polyester type; Asahi Denka Kogyo), J - DOP (dioctyl phthalate; product of Kyowa Hakko)
⑤ Silanol compound: K - hexamethyldisilazane, L - trimethylphenoxysilane, M - tris(trimethylsilyl) derivative of trimethylolpropane

### (Examples 24 and 25)

The composition of Example 21 was thoroughly dehydrated prior to curing catalyst addition and, then, a tetravalent tin catalyst was added in an anhydrous state and, further, 2 parts of vinyltrimethoxysilane was added as a dehydrating agent to give a one-component compound. Curing products were produced in the same manner as in Examples 12 to 23 and evaluated in the same manner. Separately, the same curing products as above were coated with various alkyd coatings and, after 1 day of indoor standing, evaluated for extent of curing by touching the coated surface with a finger. The respective compounding formulations and the evaluation results are shown in Table 3.

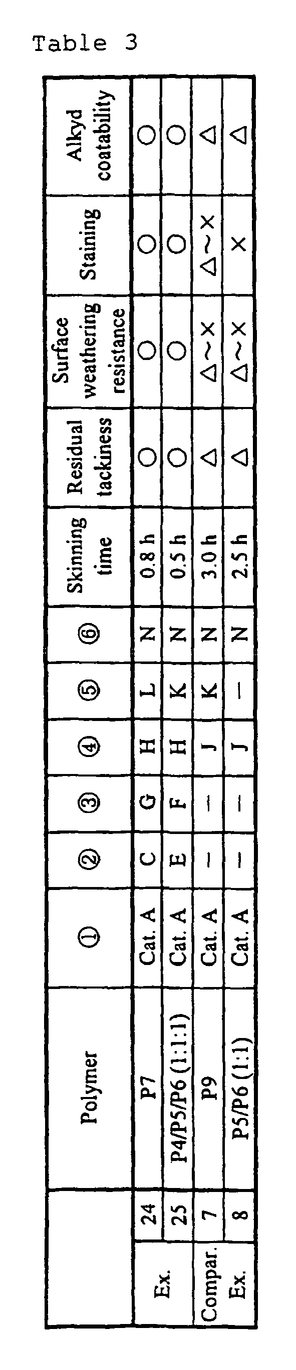

### (Explanation of headings in Table 3)

Residual tackiness: Good ← ○ > Δ > × → poor (sticky)
Surface weathering resistance: Good ← ○ > Δ > × → poor (cracking and/or blushing/whitening)
Staining: Good ← ○ > Δ > × → blackening (large quantity of adhering matter)
Alkyd coatability (1 day after coating): ○- complete curing, Δ - Some tackiness (stickiness), × - not yet cured,
alkyd coating: Rubbol AZ (product of Akzo)
① Curing catalyst: Cat. A - U-220 (dibutyltin acetylacetonate, 2 parts), Cat. B - (stannous octylate/laurylamine = 3 parts/1 part)
② Air oxidation-curable substance: C - tung oil, D-linseed oil, E - 1,2-polybutadiene
③ Photocurable substance: F - pentaerythritol triacrylate, G - trimethylolpropane triacrylate
④ Plasticizer: H - P11, I - PN-260 (polyester type; Asahi Denka Kogyo), J - DOP (dioctyl phthalate; product of Kyowa Hakko)
⑤ Silanol compound: K - hexamethyldisilazane, L - trimethylphenoxysilane, M - tris (trimethylsilyl) derivative of trimethylolpropane
⑥ Dehydrating agent: N - vinyltrimethoxysilane

### (Comparative Examples 1 to 3)

Curing products were produced in the same manner as in Examples 1 to 11 except that the polymers [P3], [P6] and [P9] were used in lieu of the polymers used in Examples 1 to 11, and the curing products were evaluated in the same manner as in Examples 1 to 11. The respective compounding formulations and the evaluation results are shown in Table 1.

### (Comparative Examples 4 to 6)

Curing products were produced in the same manner as in Examples 12 to 23 except that, in Comparative Example 4, the polymer [P3] was used in the compound in lieu of the polymer [P2] used in Example 13, that, in Comparative Example 5, the photocurable substance, air oxidation-curable substance and silanol compound used as ingredients in the compound of Example 13 were not added but DOP low in molecular weight was used as the plasticizer and, otherwise, the same formulation as in Example 13 was used, and that, in Comparative Example 6, the polymer [P6] was used and the curing agent was changed and, otherwise, the same formulation as in Comparative Example 4 was used. The curing products were evaluated in the same manner as in Examples 12 to 23. The respective compounding formulations and the evaluation results are shown in Table 2.

### (Comparative Examples 7 and 8)

A curable composition was prepared in the same manner as in Example 24 except that the polymer [P9] was used in lieu of the polymer [P7] used in Example 24. Curing products were produced and evaluated in the same manner as in Examples 12 to 23. Further, curing products were produced in the same manner as in Examples 24 and 25 except that a polymer mixture [P5/P6 (1:1)] was used in lieu of the polymer mixture [P4/P5/P6 (= 1:1:1)] used in Example 25 and the air oxidation-curable substance, photocurable substance and silanol compound were not used but DOP was used as the plasticizer in lieu of the polymer [P11], and the curing products were evaluated in the same manner. The respective compounding formulations and the evaluation results are shown in Table 3.

### (Production Example 6)

A reaction vessel equipped with a stirrer was charged with CuBr (4.2 g) and acetonitrile (27.3 g), and the contents were stirred at 65°C in a nitrogen atmosphere for 15 minutes. Thereto were added n-butyl acrylate (100 g), diethyl 2,5-dibromoadipate (8.8 g) and acetonitrile (16.6 g). After thorough mixing up with stirring, pentamethyldiethylenetriamine (0.17 g) was added to initiate the polymerization. While stirring this solution at 70°C, n-butyl acrylate (400 g) was added dropwise continuously. In the course of n-butyl acrylate dropping, triamine (0.68 g) was added in divided portions.

At the time when the monomer conversion reached 96%, the residual monomer and acetonitrile were distilled off at 80°C, 1,7-octadiene (53.7 g), acetonitrile (132 g) and triamine (1.69 g) were added, and the mixture was still stirred at 70°C, whereby a mixture containing an alkenyl group-containing polymer was obtained.

The acetonitrile and unreacted 1,7-octadiene were distilled off from the mixture, the residue was diluted with methylcyclohexane, the insoluble polymerization catalyst was removed by causing it to settle on a centrifuge. To the polymer solution in methylcyclohexane was added 6 parts of an adsorbent (Kyowaad 500SH 3 parts/Kyowaad 700SL 3 parts; both being products of Kyowa Chemical) relative to 100 parts of the polymer, and the mixture was stirred with heating in an oxygen-nitrogen mixed gas atmosphere. The insoluble matter was removed and the polymer solution was concentrated to give an alkenyl group-containing polymer (polymer [11]).

The polymer [11] was concentrated at 180°C and at a pressure not higher than 10 torr for 12 hours with stirring. Further, 100 parts of the polymer was diluted with 400 parts of methylcyclohexane, the solid matter was removed, and the solution was concentrated to give a polymer [12]. This polymer [12] had a number average molecular weight of 24,800 with a molecular weight distribution of 1.36. The number of alkenyl groups introduced per polymer molecule was 1.8.

### (Production Example 7)

To the polymer [12] were added methyl orthoformate (1 mole equivalent relative to the alkenyl group), a platinum catalyst (10 mg as platinum metal per kg of the polymer) and 1-(2-trimethoxysilylethynyl)-1,1,3,3-tetramethyldisiloxane (1.5 mole equivalents relative to the alkenyl group) in that order. The resulting mixture was stirred at 100°C in a nitrogen atmosphere for 0.5 hour. After confirmation of the disappearance of the alkenyl group by ¹H-NMR spectrometry, the reaction mixture was concentrated to give the desired methoxysilyl group-containing polymer [P12]. The number average molecular weight was 27,900 and the molecular weight distribution was 1.32. The number of silyl groups introduced per polymer molecule was 1.7.

### (Example 26)

A curable composition was prepared by adding a tetravalent tin catalyst (dibutyltin diacetylacetonate) to the polymer [P12] obtained in Production Example 7. This curable composition was cured at room temperature and skinning time was evaluated in the same manner as in Examples 1 to 11. The formulation and the result are shown in Table 4.

**Table 4**

| | Polymer | Curing catalyst | Skinning time |
|---|---|---|---|
| Ex. 26 | P12 | Cat. A | 0.1 h |
| Compar. Ex. 9 | P13 | Cat. A | 0.4 h |

| | | | |
|---|---|---|---|
| Curing catalyst: Cat. A: U-220 (dibutyltin diacetylacetonate, 2 parts) | | | |

### (Production Example 8)

A dimethoxysilyl group-containing polymer [P13] was obtained in the same manner as in Production Example 7 except that the polymer [12] obtained in Production Example 6 was reacted with dimethoxymethylsilane (3 mole equivalents relative to the alkenyl group) in lieu of 1-(2-trimethoxysilylethynyl)-1,1,3,3-tetramethyldisiloxane used in Production Example 7. The number average molecular weight was 28,400 and the molecular weight distribution was 1.51. The number of silyl groups introduced per polymer molecule was 1.5.

### (Comparative Example 9)

A curable composition was prepared by adding a tetravalent tin catalyst (dibutyltin diacetylacetonate) to the polymer [P13] obtained in production Example 8. This curable composition was cured at room temperature and skinning time was evaluated in the same manner as in Example 26. The formulation and the result are shown in Table 4.

### INDUSTRIAL APPLICABILITY

The quick curing composition of the invention is higher in curing rate as compared with the prior art compositions. Further, by adding a vinyl polymer having a crosslinking silyl group(s) of the above general formula (1) provided that a is 1 or 2 to the curable composition of the invention, it is possible to obtain products well balanced among various characteristics.

## Claims

1. A quick curing composition comprising a vinyl polymer having a crosslinking silyl group-terminated main chain,
wherein the crosslinking silyl group is represented by the general formula (1a) :
-SiY₃ (1a)
wherein Y represents a hydroxyl group or a hydrolyzable group and the three Y groups may be the same or different,
wherein the vinyl polymer is a (meth)acrylic polymer having a molecular weight distribution of less than 1.8, and
wherein the number of crosslinking silyl groups in the vinyl polymer is not less than 1.2 on average, and the silyl groups are located only at the termini of the main chain.

2. The quick curing composition according to claim 1,
wherein the vinyl polymer is an acrylic polymer.

3. The quick curing composition according to claim 2,
wherein the vinyl polymer is an acrylate ester polymer.

4. The quick curing composition according to any of claims 1 to 3,
wherein the vinyl polymer is produced by living radical polymerization.

5. The quick curing composition according to claim 4,
wherein the living radical polymerization is atom transfer radical polymerization.

6. The quick curing composition according to claim 5,
wherein an atom transfer radical polymerization catalyst is a metal complex,
said metal being selected from the group consisting of elements of the groups 7, 8, 9, 10 and 11 of the periodic table.

7. The quick curing composition according to claim 6,
wherein the atom transfer radical polymerization caralyst is a metal complex,
said metal being selected from the group consisting of copper, nickel, ruthenium and iron.

8. The quick curing composition according to claim 7,
wherein the atom transfer radical polymerization catalyst is a copper complex.

9. The quick curing composition according to any of claims 1 to 8,
which further comprises a vinyl polymer having crosslinking silyl groups of the general formula (1b):
-SiYₐR₃₋ₐ (1b)
in the formula, R represents an alkyl group containing 1 to 20 carbon atoms, an aryl group containing 6 to 20 carbon atoms, an aralkyl group containing 7 to 20 carbon atoms or a triorganosiloxy group represented by (R')₃SiO-, R' is a univalent hydrocarbon group containing 1 to 20 carbon atoms and the three R' groups may be the same or different, and, when there are two or more R groups, they may be the same or different; Y represents a hydroxyl group or a hydrolyzable group and, when there are two or more Y groups, they may be the same or different; and a represents 1 or 2.

10. The quick curing composition according to any of claims 1 to 8,
which further comprises a vinyl polymer having crosslinking silyl groups of the general formula (1b) in substantially all crosslinking silyl groups:
-SiYₐR₃₋ₐ (1b)
in the formula, R represents an alkyl group containing 1 to 20 carbon atoms, an aryl group containing 6 to 20 carbon atoms, an aralkyl group containing 7 to 20 carbon atoms or a triorganosiloxy group represented by (R')₃SiO-, R' is a univalent hydrocarbon group containing 1 to 20 carbon atoms and the three R' groups may be the same or different, and, when there are two or more R groups, they may be the same or different; Y represents a hydroxyl group or a hydrolyzable group and, when there are two or more Y groups, they may be the same or different ; and a represents 1 or 2.

11. The quick curing composition according to claim 10,
wherein a of formula (1b) is 2 in substantially all of the crosslinking silyl groups.

12. The quick curing composition according to any of claims 1 to 11,
which comprises a tin curing catalyst in an amount of 0.1 to 20 parts by weight relative to 100 parts by weight of the vinyl polymer.

13. The quick curing composition according to any of claims 1 to 12,
which comprises a photocurable substance.

14. The quick curing composition according to any of claims 1 to 13,
which comprises an air oxidation-curable substance.

15. The quick curing composition according to any of claims 1 to 14,
which comprises a high molecular weight plasticizer.

16. The quick curing composition according to any of claims 1 to 15,
which comprises a compound having one silanol group in the molecular and/or a compound capable of forming a compound having one silanol group in the molecular upon reacting with moisture.

## Patentansprüche

1. Schnell härtende Zusammensetzung, umfassend ein Vinylpolymer mit einer Hauptkette, die eine vernetzende Silylgruppe am Ende aufweist,
worin die vernetzende Silylgruppe durch die allgemeine Formel (1a) dargestellt wird:
-SiY₃ (1a)
worin Y eine Hydroxylgruppe oder eine hydrolysierbare Gruppe ist und die drei Y-Gruppen gleich oder verschieden sein können,
worin das Vinylpolymer ein (Meth)acrylpolymer mit einer Molekulargewichtsverteilung von weniger als 1,8 ist, und worin die Anzahl der vernetzenden Silylgruppen im Vinylpolymer nicht weniger als durchschnittlich 1,2 beträgt und sich die Silylgruppen nur an den Enden der Hauptkette befinden.

2. Schnell härtende Zusammensetzung gemäss Anspruch 1, worin das Vinylpolymer ein Acrylpolymer ist.

3. Schnell härtende Zusammensetzung gemäss Anspruch 2, worin das Vinylpolymer ein Acrylatesterpolymer ist.

4. Schnell härtende Zusammensetzung gemäss einem der Ansprüche 1 bis 3, worin das Vinylpolymer in einer lebenden radikalischen Polymerisation hergestellt wird.

5. Schnell härtende Zusammensetzung gemäss Anspruch 4, worin die lebende radikalische Polymerisation eine radikalische Polymerisation unter Atomtransfer ist.

6. Schnell härtende Zusammensetzung gemäss Anspruch 5, worin der Katalysator für die radikalische Polymerisation unter Atomtransfer ein Metallkomplex ist, wobei das Metall aus der Gruppe bestehend aus Elementen der Gruppen 7, 8, 9, 10 und 11 des Periodensystems ausgewählt ist.

7. Schnell härtende Zusammensetzung gemäss Anspruch 6, worin der Katalysator für die radikalische Polymerisation unter Atomtransfer ein Metallkomplex ist, wobei das Metall aus der Gruppe bestehend aus Kupfer, Nickel, Ruthenium und Eisen ausgewählt ist.

8. Schnell härtende Zusammensetzung gemäss Anspruch 7, worin der Katalysator für die radikalische Polymerisation unter Atomtransfer ein Kupferkomplex ist.

9. Schnell härtende Zusammensetzung gemäss einem der Ansprüche 1 bis 8, die zusätzlich ein Vinylpolymer mit vernetzenden Silylgruppen der allgemeinen Formel (1b) umfasst:
-SiYₐR₃₋ₐ (1b)
wobei in der Formel R eine Alkylgruppe mit 1 bis 20 Kohlenstoffatomen, eine Arylgruppe mit 6 bis 20 Kohlenstoffatomen, eine Aralkylgruppe mit 7 bis 20 Kohlenstoffatomen oder eine Triorganosiloxygruppe, dargestellt durch (R')₃SiO-, darstellt, wobei R' eine monovalente Kohlenwasserstoffgruppe mit 1 bis 20 Kohlenstoffatomen ist und die drei R'-Gruppen gleich oder verschieden sein können und, wenn zwei oder mehr R-Gruppen vorhanden sind, diese gleich oder verschieden sein können; Y eine Hydroxylgruppe oder eine hydrolysierbare Gruppe darstellt und, wenn zwei oder mehr Y-Gruppen vorhanden sind, diese gleich oder verschieden sein können; und a 1 oder 2 ist.

10. Schnell härtende Zusammensetzung gemäss einem der Ansprüche 1 bis 8, die zusätzlich ein Vinylpolymer mit vernetzenden Silylgruppen der allgemeinen Formel (1b) in im Wesentlichen allen vernetzenden Silylgruppen umfasst:
-SiYₐR₃₋ₐ (1b)
wobei in der Formel R eine Alkylgruppe mit 1 bis 20 Kohlenstoffatomen, eine Arylgruppe mit 6 bis 20 Kohlenstoffatomen, eine Aralkylgruppe mit 7 bis 20 Kohlenstoffatomen oder eine Triorganosiloxygruppe, dargestellt durch (R')₃SiO-, darstellt, wobei R' eine monovalente Kohlenwasserstoffgruppe mit 1 bis 20 Kohlenstoffatomen ist und die drei R'-Gruppen gleich oder verschieden sein können und, wenn zwei oder mehr R-Gruppen vorhanden sind, diese gleich oder verschieden sein können; Y eine Hydroxylgruppe oder eine hydrolysierbare Gruppe darstellt und, wenn zwei oder mehr Y-Gruppen vorhanden sind, diese gleich oder verschieden sein können; und a 1 oder 2 ist.

11. Schnell härtende Zusammensetzung gemäss Anspruch 10, worin a in Formel (1b) 2 in im Wesentlichen allen der vernetzenden Silylgruppen ist.

12. Schnell härtende Zusammensetzung gemäss einem der Ansprüche 1 bis 11, die einen Zinn-Härtungskatalysator in einer Menge von 0,1 bis 20 Gew.-Teilen, bezogen auf 100 Gew.-Teile des Vinylpolymers, umfasst.

13. Schnell härtende Zusammensetzung gemäss einem der Ansprüche 1 bis 12, die eine fotohärtbare Substanz umfasst.

14. Schnell härtende Zusammensetzung gemäss einem der Ansprüche 1 bis 13, die eine durch Luftoxidation härtbare Substanz umfasst.

15. Schnell härtende Zusammensetzung gemäss einem der Ansprüche 1 bis 14, die einen Weichmacher mit hohem Molekulargewicht umfasst.

16. Schnell härtende Zusammensetzung gemäss einem der Ansprüche 1 bis 15, die eine Verbindung mit einer Silanolgruppe im Molekül und/oder eine Verbindung, die geeignet ist, nach Reaktion mit Feuchtigkeit eine Silanolgruppe im Molekül zu bilden, umfasst.

## Revendications

1. Composition à durcissement rapide comprenant un polymère vinylique ayant une chaîne principale terminée par un ou des groupes silyle de réticulation, dans laquelle le groupe silyle de réticulation est représenté par la formule générale (1a) :
-SiY₃ (1a)
dans laquelle Y représente un groupe hydroxyle ou un groupe hydrolysable et les trois groupes Y peuvent être identiques ou différents, dans laquelle le polymère vinylique est un polymère (méth)acrylique ayant un indice de polydispersité inférieur à 1,8 ; et dans laquelle le nombre de groupes silyle de réticulation dans le polymère vinylique n'est pas inférieur à 1,2 en moyenne, et les groupes silyle ne sont situés qu'au niveau des extrémités de la chaîne principale.

2. Composition à durcissement rapide selon la revendication 1 dans laquelle le polymère vinylique est un polymère acrylique.

3. Composition à durcissement rapide selon la revendication 2 dans laquelle le polymère vinylique est un polyester acrylique.

4. Composition à durcissement rapide selon l'une quelconque des revendications 1 à 3, dans laquelle le polymère vinylique est produit par polymérisation de radicaux vivants.

5. Composition à durcissement rapide selon la revendication 4, dans laquelle la polymérisation de radicaux vivants est une polymérisation radicalaire par transfert d'atomes.

6. Composition à durcissement rapide selon la revendication 5, dans laquelle un catalyseur de polymérisation radicalaire par transfert d'atomes est un complexe métallique, ledit métal étant choisi dans le groupe formé par les éléments des groupes 7, 8, 9, 10 et 11 du tableau périodique.

7. Composition à durcissement rapide selon la revendication 6, dans laquelle le catalyseur de polymérisation radicalaire par transfert d'atomes est un complexe métallique, ledit métal étant choisi dans le groupe formé par le cuivre, le nickel, le ruthénium et le fer.

8. Composition à durcissement rapide selon la revendication 7, dans laquelle le catalyseur de polymérisation radicalaire par transfert d'atomes est un complexe de cuivre.

9. Composition à durcissement rapide selon l'une quelconque des revendications 1 à 8, comprenant en outre un polymère vinylique ayant des groupes silyle de réticulation de formule générale (1b) :
-SiYₐR₃₋ₐ (1b)
dans la formule, R représente un groupe alkyle contenant de 1 à 20 atomes de carbone, un groupe aryle contenant de 6 à 20 atomes de carbone, un groupe aralkyle contenant de 7 à 20 atomes de carbone ou un groupe triorganosiloxy représenté par le formule (R')₃SiO-, où R' est un groupe hydrocarboné monovalent contenant de 1 à 20 atomes de carbone et les trois groupes R' peuvent être identiques ou différents, et, quand il y a deux groupes R ou plus, ils peuvent être identiques ou différents ; Y représente un groupe hydroxyle ou un groupe hydrolysable et, quand il y a deux groupes Y ou plus, ils peuvent être identiques ou différents ; et a représente 1 ou 2.

10. Composition à durcissement rapide selon l'une quelconque des revendications 1 à 8, qui comprend en outre un polymère vinylique ayant des groupes silyle de réticulation de la formule générale (1b) dans essentiellement tous les groupes silyle de réticulation :
-SiYₐR₃-a (1b)
dans la formule, R représente un groupe alkyle contenant de 1 à 20 atomes de carbone, un groupe aryle contenant de 6 à 20 atomes de carbone, un groupe aralkyle contenant de 7 à 20 atomes de carbone ou un groupe triorganosiloxy représenté par le formule (R')₃SiO-, R' est un groupe hydrocarboné monovalent contenant de 1 à 20 atomes de carbone et les trois groupes R' peuvent être identiques ou différents, et, quand il y a deux groupes R ou plus, ils peuvent être identiques ou différents ; Y représente un groupe hydroxyle ou un groupe hydrolysable et, quand il y a deux groupes Y ou plus, ils peuvent être identiques ou différents ; et a représente 1 ou 2.

11. Composition à durcissement rapide selon la revendication 10, dans laquelle a, dans la formule (1b), est 2 dans essentiellement tous les groupes silyle de réticulation.

12. Composition à durcissement rapide selon l'une quelconque des revendications 1 à 11, qui comprend un catalyseur de durcissement à base d'étain en une quantité de 0,1 à 20 parties en poids pour 100 parties en poids du polymère vinylique.

13. Composition à durcissement rapide selon l'une quelconque des revendications 1 à 12, qui comprend une substance photodurcissable.

14. Composition à durcissement rapide selon l'une quelconque des revendications 1 à 13, qui comprend une substance durcissable par oxydation à l'air.

15. Composition à durcissement rapide selon l'une quelconque des revendications 1 à 14, qui comprend un plastifiant de masse moléculaire élevée.

16. Composition à durcissement rapide selon l'une quelconque des revendications 1 à 15, qui comprend un composé ayant un groupe silanol dans la molécule et/ou un composé capable de former un composé ayant un groupe silanol dans la molécule après réaction avec l'humidité.
